(19) Europäisches Patentamt
European Patent Office
Office européen des brevets

(11) **EP 4 546 217 A1**

(12) **EUROPEAN PATENT APPLICATION**
published in accordance with Art. 153(4) EPC

(43) Date of publication:
**30.04.2025 Bulletin 2025/18**

(21) Application number: **23916379.3**

(22) Date of filing: **20.09.2023**

(51) International Patent Classification (IPC):
*G06N 3/063* (2023.01)   *G06N 3/0464* (2023.01)
*G06F 17/15* (2006.01)

(52) Cooperative Patent Classification (CPC):
**G06F 17/15; G06N 3/0464; G06N 3/063**

(86) International application number:
**PCT/KR2023/014234**

(87) International publication number:
**WO 2024/150895 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2023 KR 20230003432**

(71) Applicant: Samsung Electronics Co., Ltd.
Suwon-si, Gyeonggi-do 16677 (KR)

(72) Inventors:
• JIN, Cheolgyu
 Suwon-si Gyeonggi-do 16677 (KR)
• BAIK, Jinhwan
 Suwon-si Gyeonggi-do 16677 (KR)
• PARK, Jaeun
 Suwon-si Gyeonggi-do 16677 (KR)
• LEE, Jonghun
 Suwon-si Gyeonggi-do 16677 (KR)

(74) Representative: Arnold & Siedsma
Bezuidenhoutseweg 57
2594 AC The Hague (NL)

(54) **ELECTRONIC DEVICE AND METHOD FOR CONTROLLING SAME**

(57)   An electronic apparatus is provided. The electronic device includes acquiring padding data corresponding to the input data in case of acquiring a convolution calculation instruction for the input data, identifying a calculation processing unit based on a size of the buffer and a size of the padding data, classifying the input data and the padding data into a plurality of target regions based on the calculation processing unit and the sizes of the buffers, storing one target region among the plurality of target regions in the first buffer, the second buffer or the third buffer, acquiring target data for the convolution calculation instruction based on the calculation processing unit and the plurality of target regions, and controlling the convolution calculation module to perform the convolution calculation instruction based on the target data and kernel data.

FIG. 6

EP 4 546 217 A1

**Description**

[Technical Field]

The disclosure relates to an electronic apparatus and a controlling method thereof. More particularly, the disclosure relates to an electronic apparatus which performs convolution calculation on input data by using a deep learning model and a controlling method thereof.

A convolution neural network (CNN) among deep learning models may acquire output data by convolution calculation. However, the convolution calculation on input data may have a long calculation time although the operation has high accuracy. The calculation time may be long because the operation needs more calls (or accesses) and long call time of data stored in a memory (e.g., dynamic random access memory (DRAM)).

In addition, the number of times that data called once is called repeatedly may be increased due to a feature of the convolution calculation, and the more repeated calls, the longer the calculation time.

In addition, there may be a method of storing the input data in a processor (e.g., central processing unit (CPU)) for less calls for the data stored in the memory (e.g., DRAM). However, this method may have a problem in that a lot of processor resources are allocated in case that the input data is large. In addition, the method cannot be used in case that a storage space of the processor is smaller than a size of the input data.

The above information is presented as background information only to assist with an understanding of the disclosure. No determination has been made, and no assertion is made, as to whether any of the above might be applicable as prior art with regard to the disclosure.

[Technical Solution]

Aspects of the disclosure are to address at least the above-mentioned problems and/or disadvantages and to provide at least the advantages described below. Accordingly, an aspect of the disclosure is to provide an electronic apparatus which classifies input data and padding data to divide and store the same in a plurality of buffers in a convolution calculation process, and a controlling method thereof.

Additional aspects will be set forth in part in the description which follows and, in part, will be apparent from the description, or may be learned by practice of the presented embodiments.

In accordance with an aspect of the disclosure, an electronic apparatus is provided. The electronic apparatus includes a memory storing input data, and at least one processor including a convolution calculation module, a first buffer, a second buffer, and a third buffer, wherein the at least one processor is configured to acquire padding data corresponding to the input data in case of acquiring a convolution calculation instruction for the input data, identify a calculation processing unit based on a size of the buffer and a size of the padding data, classify the input data and the padding data into a plurality of target regions based on the calculation processing unit and the sizes of the buffers, store one target region among the plurality of target regions in the first buffer, the second buffer or the third buffer, acquire target data for the convolution calculation instruction based on the calculation processing unit and the plurality of target regions, and control the convolution calculation module to perform the convolution calculation based on the target data and kernel data.

The at least one processor may be configured to determine the size of the padding data based on at least one of a size of the input data, a size of output data, a size of the kernel data, or a size of a stride representing a distance at which the kernel data is applied.

The at least one processor may be configured to determine a row size of the buffer as a row size of the calculation processing unit, and determine a sum of column sizes of the buffers and a column size of the padding data as a column size of the calculation processing unit.

The at least one processor may be configured to classify the input data into a first sub-region, a second sub-region, and a third sub-region based on the sizes of the buffers, identify a padding region including only the padding data, identify a first target region including data included in the first sub-region, a second target region including data included in the second sub-region, and a third target region including data included in the third sub-region, based on a position of the calculation processing unit and the sizes of the buffers, and store at least one of the padding region, the first target region, the second target region, and the third target region in at least one of the first buffer, the second buffer, or the third buffer.

The at least one processor may be configured to identify the first target region including at least one of the data stored in the first sub-region or the padding data corresponding to the first sub-region based on the position of the calculation processing unit and the sizes of the buffers, identify the second target region including at least one of the data stored in the second sub-region or the padding data corresponding to the second sub-region based on the position of the calculation processing unit and the sizes of the buffers, and identify the third target region including at least one of the data stored in the third sub-region or the padding data corresponding to the third sub-region based on the position of the calculation processing unit and the sizes of the buffers.

The at least one processor may be configured to store the padding region in the first buffer, store the first target region in the second buffer, and store the second target region in the third buffer.

The at least one processor may be configured to store the first target region in the first buffer, store the second target region in the second buffer, and store the third target region in the third buffer.

The at least one processor may be configured to store the second target region in the first buffer, store the third target region in the second buffer, and store the padding region in the third buffer.

The at least one processor may be configured to acquire the target data based on a predetermined region among all regions of the first buffer, a predetermined region among all regions of the second buffer, and a predetermined region among all regions of the third buffer, and the predetermined region of the first buffer, the predetermined region of the second buffer, and the predetermined region of the third buffer may be determined based on the calculation processing unit.

The at least one processor may be configured to acquire the kernel data from a kernel buffer included in the at least one processor.

In accordance with another aspect of the disclosure, a controlling method of an electronic apparatus which stores input data and includes a convolution calculation module, a first buffer, a second buffer, and a third buffer is provided. The method includes acquiring padding data corresponding to the input data in case that a convolution calculation instruction for the input data is acquired, identifying a calculation processing unit based on a size of the buffer and a size of the padding data, classifying the input data and the padding data into a plurality of target regions based on the calculation processing unit and the sizes of the buffers, storing one target region among the plurality of target regions in the first buffer, the second buffer or the third buffer, acquiring target data for convolution calculation instruction based on the calculation processing unit and the plurality of target regions, and controlling the convolution calculation module to perform the convolution calculation instruction based on the target data and kernel data.

In the acquiring of the padding data, the size of the padding data may be determined based on at least one of a size of the input data, a size of output data, a size of the kernel data, or a size of a stride representing a distance at which the kernel data is applied.

In the identifying of the calculation processing unit, a row size of the buffer may be determined as a row size of the calculation processing unit, and a size of a sum of column, sizes of the buffers, and a column size of the padding data may be used to determine a column size of the calculation processing unit.

In the classifying, the input data may be classified into a first sub-region, a second sub-region, and a third sub-region based on the sizes of the buffers, a padding region including only the padding data may be identified, and a first target region including data included in the first sub-region, a second target region including data included in the second sub-region, and a third target region including data included in the third sub-region may be identified based on a position of the calculation processing unit and the sizes of the buffers, and in the storing, at least one of the padding region, the first target region, the second target region, or the third target region may be stored in at least one of the first buffer, the second buffer, or the third buffer.

In the classifying, the first target region including at least one of the data stored in the first sub-region or the padding data corresponding to the first sub-region may be identified based on the position of the calculation processing unit and the sizes of the buffers, the second target region including at least one of the data stored in the second sub-region or the padding data corresponding to the second sub-region may be identified based on the position of the calculation processing unit and the sizes of the buffers, and the third target region including at least one of the data stored in the third sub-region or the padding data corresponding to the third sub-region may be identified based on the position of the calculation processing unit and the sizes of the buffers.

In the storing, the padding region may be stored in the first buffer, the first target region may be stored in the second buffer, and the second target region may be stored in the third buffer.

In the storing, the first target region may be stored in the first buffer, the second target region may be stored in the second buffer, and the third target region may be stored in the third buffer.

In the storing, the second target region may be stored in the first buffer, the third target region may be stored in the second buffer, and the padding region may be stored in the third buffer.

In the acquiring of the target data, the target data may be acquired based on a predetermined region among all regions of the first buffer, a predetermined region among all regions of the second buffer, and a predetermined region among all regions of the third buffer, and the predetermined region of the first buffer, the predetermined region of the second buffer, and the predetermined region of the third buffer may be determined based on the calculation processing unit.

The controlling method further includes acquiring the kernel data from a kernel buffer included in the electronic apparatus.

Other aspects, advantages, and salient features of the disclosure will become apparent to those skilled in the art from the following detailed description, which, taken in conjunction with the annexed drawings, discloses various embodiments of the disclosure.

[Description of Drawings]

The above and other aspects, features, and advantages of certain embodiments of the disclosure will be more apparent from the following description taken in conjunction with the accompanying drawings, in which:

FIG. 1 is a block diagram showing an electronic apparatus according to an embodiment of the disclosure;
FIG. 2 is a block diagram for explaining a detailed configuration of the electronic apparatus of FIG. 1 according to an embodiment of the disclosure;
FIG. 3 is a block diagram for explaining a kernel buffer according to an embodiment of the disclosure;
FIG. 4 is a block diagram for explaining multipliers according to an embodiment of the disclosure;
FIG. 5 is a block diagram for explaining a dynamic random access memory (DRAM) and a static random access memory (SRAM) according to an embodiment of the disclosure;
FIG. 6 is a flowchart for explaining an operation of convolution calculation according to an embodiment of the disclosure;
FIG. 7 is a flowchart for explaining an operation of acquiring padding data according to an embodiment of the disclosure;
FIG. 8 is a view for explaining an operation of computing a size of the padding data according to an embodiment of the disclosure;
FIG. 9 is a view for explaining input data and the padding data according to an embodiment of the disclosure;
FIG. 10 is a view for explaining an operation of temporarily storing the input data and the padding data according to an embodiment of the disclosure;
FIG. 11 is a flowchart for explaining an operation of computing a size of a calculation processing unit according to an embodiment of the disclosure;
FIG. 12 is a flowchart for explaining an operation of determining a target region and storing the same in a buffer according to an embodiment of the disclosure;
FIG. 13 is a flowchart for explaining an operation of acquiring target data according to an embodiment of the disclosure;
FIG. 14 is a view for explaining an operation of the convolution calculation according to an embodiment of the disclosure;
FIG. 15 is a view for explaining an operation of the convolution calculation according to an embodiment of the disclosure;
FIG. 16 is a view for explaining an operation of the convolution calculation according to an embodiment of the disclosure;
FIG. 17 is a view for explaining an operation of the convolution calculation according to an embodiment of the disclosure;
FIG. 18 is a view for explaining an operation of the convolution calculation according to an embodiment of the disclosure;
FIG. 19 is a view for explaining an operation of the convolution calculation according to an embodiment of the disclosure;
FIG. 20 is a view for explaining an operation of the convolution calculation according to an embodiment of the disclosure;
FIG. 21 is a view for explaining an operation of the convolution calculation according to an embodiment of the disclosure;
FIG. 22 is a view for explaining an operation of the convolution calculation according to an embodiment of the disclosure;
FIG. 23 is a view for explaining output data acquired from an operation of the convolution calculation according to an embodiment of the disclosure;
FIG. 24 is a view for explaining data stored in a first buffer, a second buffer, and a third buffer according to an embodiment of the disclosure;
FIG. 25 is a view for explaining data stored in the first buffer, the second buffer, and the third buffer according to an embodiment of the disclosure;
FIG. 26 is a view for explaining data stored in the first buffer, the second buffer, and the third buffer according to an embodiment of the disclosure;
FIG. 27 is a view for explaining a controlling method of an electronic apparatus according to an embodiment of the disclosure; and
FIG. 28 is a view for explaining an artificial intelligence model which performs a data processing operation by using a plurality of buffers or the like according to an embodiment of the disclosure.

Throughout the drawings, it should be noted that like reference numbers are used to depict the same or similar elements, features, and structures.

[Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the specification, an expression "have," "may have," "include," "may include," or the like, indicates the existence of a corresponding feature (for example, a numerical value, a function, an operation or a component such as a part), and does not exclude the existence of an additional feature.

An expression, "at least one of A or/and B" may indicate either "A or B", or "both of A and B."

Expressions "first," "second," and the like, used in the specification may qualify various components regardless of the sequence or importance of the components. The expression is used only to distinguish one component from another component, and does not limit the corresponding component.

In case that any component (for example, a first component) is mentioned to be "(operatively or communicatively) coupled with/to" or "connected to another component (for example, a second component), it is to be understood that any component may be directly coupled to another component or may be coupled to another component through still another component (for example, a third component).

A term of a singular number may include its plural number unless explicitly indicated otherwise in the context. It is to be understood that a term "include", "formed of" or the like used in the specification specifies the presence of features, numerals, steps, operations, components, parts or combinations thereof, which is mentioned in the specification, and does not preclude the presence or addition of one or more other features, numerals, steps, operations, components, parts or combinations thereof.

In the disclosure, a "module" or a "~er/~or" may perform at least one function or operation, may be implemented by hardware or software, or be implemented by a combination of hardware and software. In addition, a plurality of "modules" or a plurality of "~ers/~ors" may be integrated in at least one module to be implemented by at least one processor (not shown) except for a "module" or a "~er/~or" that needs to be implemented by specific hardware.

In the specification, such a term as a "user" may refer to a person who uses an electronic apparatus or an apparatus (for example, an artificial intelligence electronic apparatus) which uses the electronic apparatus.

Hereinafter, one or more embodiments of the disclosure are described in detail with reference to the accompanying drawings.

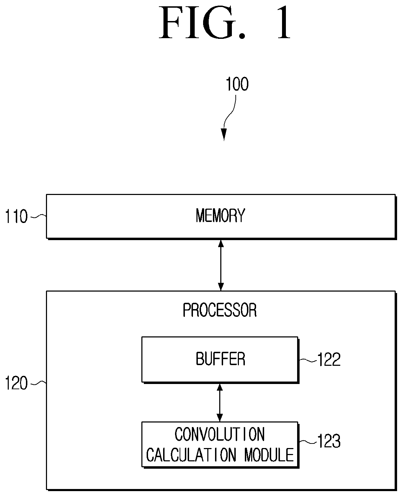

FIG. 1 is a block diagram showing an electronic apparatus according to an embodiment of the disclosure.

Referring to FIG. 1, an electronic apparatus 100 may include a memory 110 and at least one processor 120. At least one processor 120 may include a buffer 122 and a convolution calculation module 123.

The electronic apparatus 100 may be a device which performs convolution calculation.

The electronic apparatus 100 according to various embodiments in the specification may include, for example, at least one of a smartphone, a tablet personal computer (PC), a mobile phone, a desktop PC, a laptop PC, a personal digital assistant (PDA), or a portable multimedia player (PMP). In some embodiments, the electronic apparatus 100 may include, for example, at least one of a television, a digital video disk (DVD) player, or a media box (e.g., Samsung HomeSync™, Apple TV™, or Google TV™).

The memory 110 may be implemented as an internal memory such as a read-only memory (ROM, e.g., electrically erasable programmable read-only memory (EEPROM)) or a random access memory (RAM), included in the processor 120, or as a memory separate from the processor 120. In this case, the memory 110 may be implemented in the form of a memory embedded in the electronic apparatus 100 or in the form of a memory detachable from the electronic apparatus 100, based on a data storing purpose. For example, data for driving the electronic apparatus 100 may be stored in the memory embedded in the electronic apparatus 100, and data for the extended function of the electronic apparatus 100 may be stored in the memory detachable from the electronic apparatus 100.

Meanwhile, the memory embedded in the electronic apparatus 100 may be implemented as at least one of a volatile memory (e.g., dynamic RAM (DRAM), static RAM (SRAM) or synchronous dynamic RAM (SDRAM)), a non-volatile memory (e.g., one time programmable ROM (OTPROM)), programmable ROM (PROM), erasable and programmable ROM (EPROM), electrically erasable and programmable ROM (EEPROM)), a mask ROM, a flash ROM, a flash memory (e.g., NAND flash or NOR flash or the like), a hard drive or a solid state drive (SSD); and the memory detachable from the electronic apparatus 100 may be implemented as a memory card (e.g., compact flash (CF), secure digital (SD)), micro secure digital (Micro-SD), mini secure digital (mini-SD), extreme digital (xD), or multi-media card (MMC)), an external memory which may be connected to a universal serial bus (USB) port (e.g., USB memory), or the like.

At least one processor 120 may control an overall operation of the electronic apparatus 100. In detail, at least one processor 120 may function to control the overall operation of the electronic apparatus 100.

At least one processor 120 may be implemented as a digital signal processor (DSP), a microprocessor, or a time controller (TCON). However, at least one processor 120 is not limited thereto, and may include at least one of a central processing unit (CPU), a micro controller unit (MCU), a micro processing unit (MPU), a controller, an application processor (AP), a graphics-processing unit (GPU), a communication processor (CP), or an advanced reduced instruction set computer (RISC) machine (ARM) processor, or may be defined by these terms. In addition, at least one processor 120 may be implemented as a system-on-chip (SoC) or a large scale integration (LSI), in which a processing algorithm is embedded, or may be implemented in the form of a field programmable gate array (FPGA). In addition, at least one processor 120 may perform various functions by executing computer executable instructions stored in the memory.

At least one processor 120 may include at least one of the buffer 122 or the convolution calculation module 123.

The memory 110 may store input data.

At least one processor 120 may include a first buffer 122-1, a second buffer 122-2, and a third buffer 122-3 as well as the convolution calculation module 123.

According to the various embodiments, the buffers 122-1, 122-2, and 122-3 may all have the same size as one another. According to the various embodiments, some of the buffers 122-1, 122-2, and 122-3 may have different sizes from each other. The following description is provided based on an embodiment in which the buffers 122-1, 122-2, and 122-3 have the same size as one another.

At least one processor 120 may acquire padding data corresponding to the input data in case of acquiring a convolution calculation instruction for the input data, identify a calculation processing unit based on the size of the buffer and a size of the padding data, classify the input data and the padding data into a plurality of target regions based on the calculation processing unit and the sizes of the buffers 122-1, 122-2, and 122-3, store one target region among the plurality of target regions in the first buffer 122-1, the second buffer 122-2 or the third buffer 122-3, acquire target data for the convolution calculation based on the calculation processing unit and the plurality of target regions, and control the convolution calculation module 123 to perform the convolution calculation based on the target data and kernel data.

At least one processor 120 may acquire (or receive) the convolution calculation instruction. The convolution calculation instruction may be a control instruction for performing the convolution calculation on the input data. The convolution calculation instruction may be a control instruction for performing the convolution calculation on the input data to output output data having a predetermined size with respect to the input data. The convolution calculation instruction may be a control instruction for outputting the output data having the predetermined size by performing the convolution calculation on the input data and the kernel data.

None of a size of the input data and a size of the kernel data may be suitable for performing the convolution calculation in case that it is necessary to acquire the output data having the predetermined size. Accordingly, at least one processor 120 may perform a preprocessing operation on the input data. At least one processor 120 may acquire the padding data corresponding to the input data. In addition, at least one processor 120 may acquire preprocessed data including the input data and the padding data.

Assume that the input data is matrix data having the predetermined size. The padding data may be data disposed in an outer region of the input data. The padding data may include a padding value and position information where the padding value is stored. The padding value may be "zero" or a "predetermined value k".

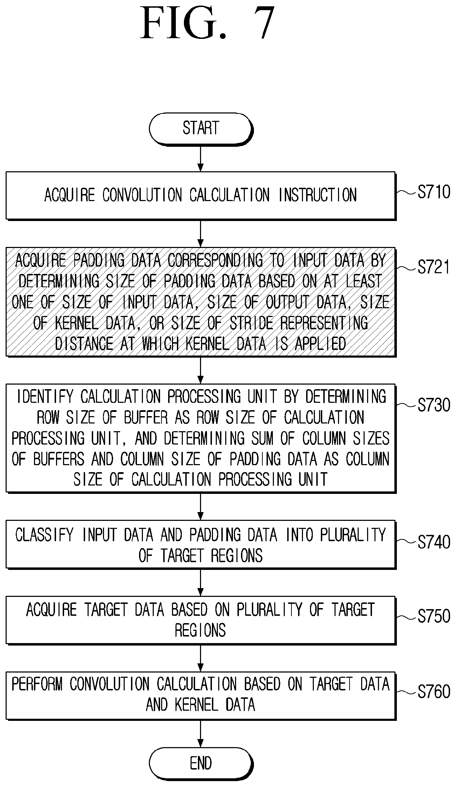

A detailed description of the padding data is described with reference to FIGS. 7 to 9.

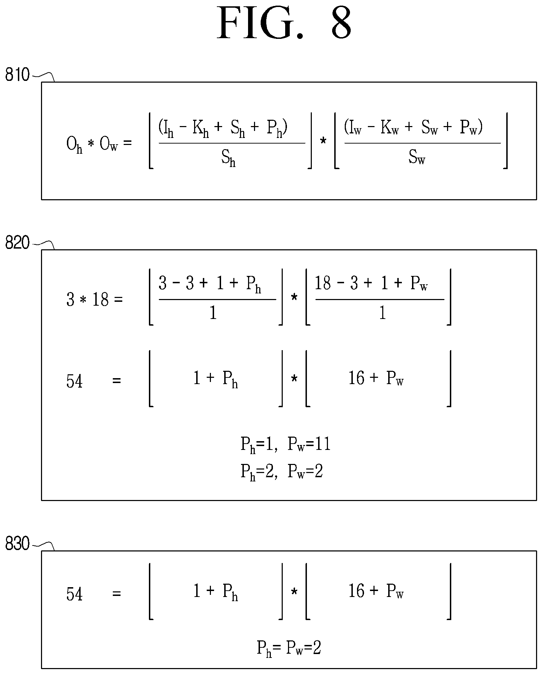

Meanwhile, at least one processor 120 may determine the size of the padding data based on at least one of the size of the input data, the size of the output data, the size of the kernel data, or a size of a stride representing a distance at which the kernel data is applied. A detailed calculation process of determining the size of the padding data is described with reference to FIG. 8.

At least one processor 120 may identify a calculation processing unit. The calculation processing unit may be a unit of the convolution calculation that may be processed by the convolution calculation module 123. At least one processor 120 may identify the size of the kernel data or the size of the target data for performing the convolution calculation as a calculation processing unit. The calculation processing unit may be changed by the convolution calculation module 123 performing the convolution calculation. In addition, the calculation processing unit may depend on a user setting. The calculation processing unit may be changed based on the performance of at least one processor 120 or that of the convolution calculation module 123.

The larger the calculation processing unit, the more processing resources may be required although a size of data to be computed at one time is larger. The smaller the calculation processing unit, the more computations (or data calls) may be required although the processing resources are less. Accordingly, at least one processor 120 may determine the calculation processing unit based on the performance of the convolution calculation module 123. The performance of the convolution calculation module 123 may indicate an amount of data that may be processed at one time. The calculation processing unit may be set to the predetermined size or dependent on the user setting in case that the convolution calculation is performed.

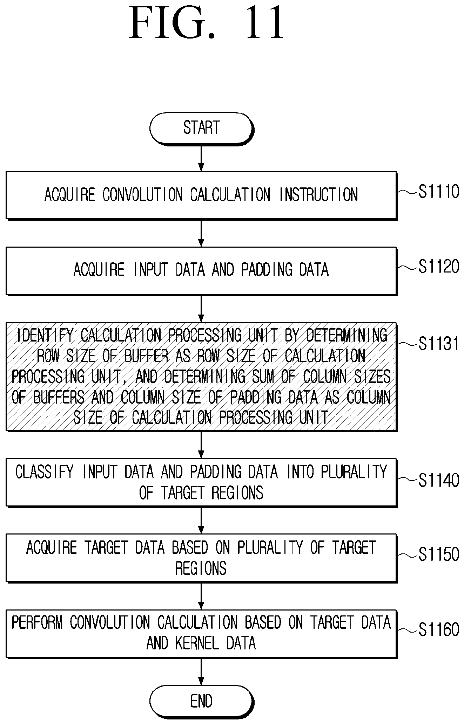

Meanwhile, at least one processor 120 may determine a row size of the buffer 122-1, 122-2, or 122-3 as a row size of the calculation processing unit, and determine a sum of column sizes of the buffers 122-1, 122-2, and 122-3 and a column size of the padding data as a column size of the calculation processing unit. Details thereof are described with reference to FIG. 11.

At least one processor 120 may store the data for performing the convolution calculation in each of the buffers 122-1, 122-2, and 122-3.

The data stored in the buffer 122-1, 122-2, or 122-3 may be described as the target region. At least one processor 120 may determine a data region stored in the buffer 122-1, 122-2, or 122-3, and describe the determined region as the target region.

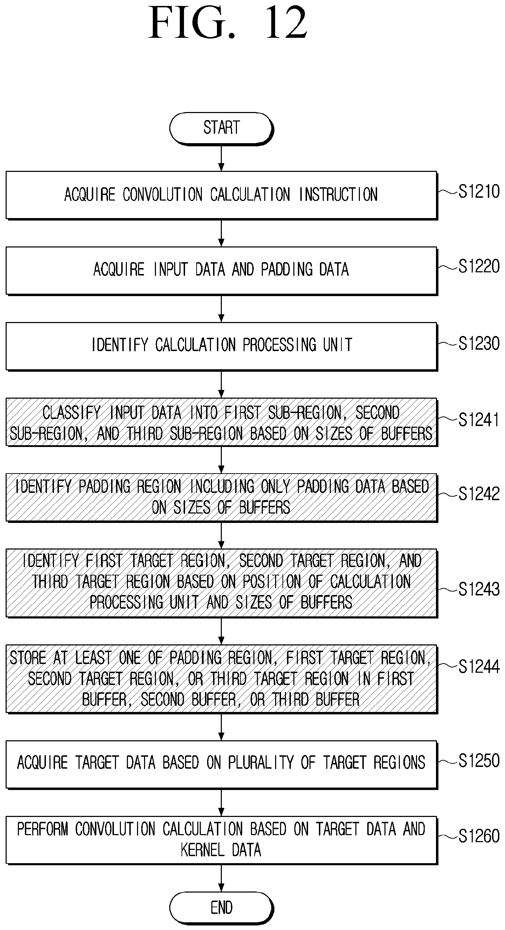

At least one processor 120 may acquire the preprocessed data including the input data and the padding data. In addition, at least one processor 120 may classify the preprocessed data into the plurality of target regions based on the calculation processing unit and the sizes of the buffer 122-1, 122-2, and 122-3. A detailed operation related to the target region is described with reference to FIG. 12.

Meanwhile, at least one processor 120 may classify the input data into a first sub-region, a second sub-region, and a third sub-region based on the sizes of the buffers 122-1, 122-2, and 122-3, identify a padding region including only the padding data, identify a first target region including data included in the first sub-region, a second target region including data included in the second sub-region, and a third target region including data included in the third sub-region, based on a position of the calculation processing unit and the sizes of the buffers, and store at least one of the padding region, the first target region, the second target region, or the third target region in at least one of the first buffer 122-1, the second buffer 122-2, or the third buffer 122-3.

At least one processor 120 may classify the input data into the plurality of sub-regions based on the sizes of the buffers 122-1, 122-2, and 122-3. The plurality of sub-regions may be regions including no overlapped data and classified from each other.

The first target region (or the second target region or the third target region) may include at least one of the data included in the first sub-region (or the second sub-region or the third sub-region). The first target region may include the padding data based on a convolution calculation process. For example, the padding data may be included in the target region in the convolution calculation on a first row and a last row.

At least one processor 120 may acquire the padding data. At least one processor 120 may acquire the preprocessed data including the input data and the padding data.

At least one processor 120 may generate the target region which includes data included in a predetermined row of the sub-region, a row above the predetermined row, and a row below the predetermined row, in the preprocessed data in case of performing the convolution calculation on the predetermined row (corresponding to the position of the calculation processing unit) of the input data.

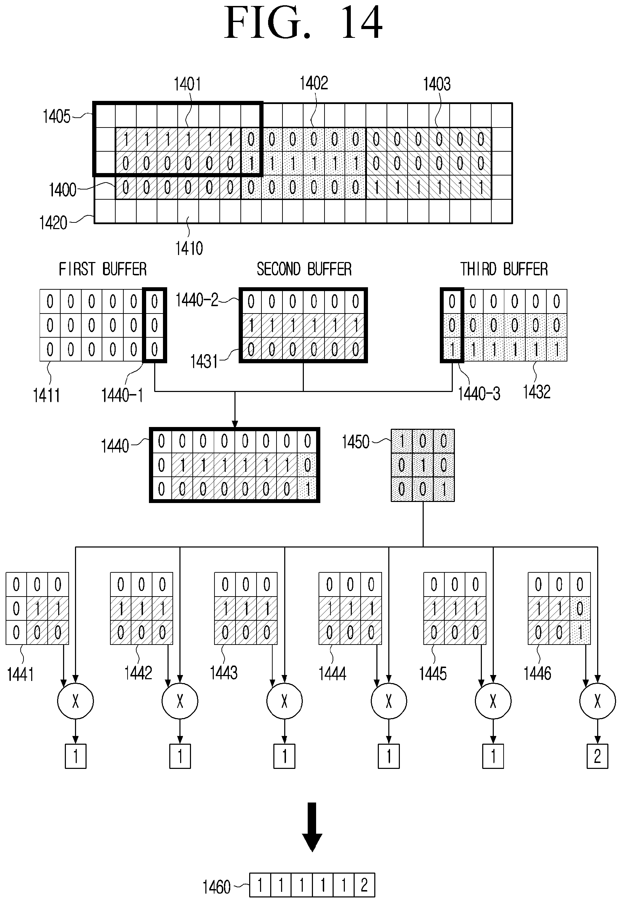

This configuration is described based on embodiments disclosed with reference to FIGS. 14 to 16. At least one processor 120 may acquire first data [1,1,1,1,1,1] disposed on a predetermined row (e.g., first row) in a first sub-region 1401, 1501, or 1601, second data [0,0,0,0,0,0] disposed above the first data among preprocessed data 1420, 1520, or 1620, and third data [0,0,0,0,0,0] disposed below the first data among the preprocessed data 1420, 1520, or 1620. At least one processor 120 may identify a first target region 1431 or 1531 by disposing the second data in the first row, the first data in a second row, and the third data in a third row.

At least one processor 120 may acquire third data [0,0,0,0,0,0] disposed on a predetermined row in a second sub-region 1402, 1502, or 1602, fourth data [1,1,1,1,1,1] disposed above the third data among the preprocessed data 1420, 1520, or 1620, and fifth data [0,0,0,0,0,0] disposed below the third data among the preprocessed data 1420, 1520, or 1620. At least one processor 120 may identify a second target region 1432, 1532 or 1632 by disposing the fourth data in the first row, the third data in the second row, and the fifth data in the third row.

At least one processor 120 may acquire seventh data [0,0,0,0,0,0] disposed on a predetermined row in a second sub-region 1402, 1502, or 1602, eighth data [0,0,0,0,0,0] disposed above the seventh data among the preprocessed data 1420, 1520, or 1620, and ninth data [1,1,1,1,1,1] disposed below the seventh data among the preprocessed data 1420, 1520, or 1620. At least one processor 120 may identify a third target region 1533 or 1633 by disposing the eighth data in the first row, the seventh data in the second row, and the ninth data in the third row.

Meanwhile, at least one processor 120 may identify the first target region including at least one of the data stored in the first sub-region or the padding data corresponding to the first sub-region based on the position of the calculation processing unit and the sizes of the buffers 122-1, 122-2 and 122-3, identify the second target region including at least one of the data stored in the second sub-region or the padding data corresponding to the second sub-region based on the position of the calculation processing unit and the sizes of the buffers 122-1, 122-2 and 122-3, and identify the third target region including at least one of the data stored in the third sub-region or the padding data corresponding to the third sub-region based on the position of the calculation processing unit and the sizes of the buffers 122-1, 122-2 and 122-3.

Meanwhile, at least one processor 120 may store the padding region in the first buffer 122-1, store the first target region in the second buffer 122-2, and store the second target region in the third buffer 122-3. Embodiments thereof are described with reference to FIGS. 14, 17 and 20.

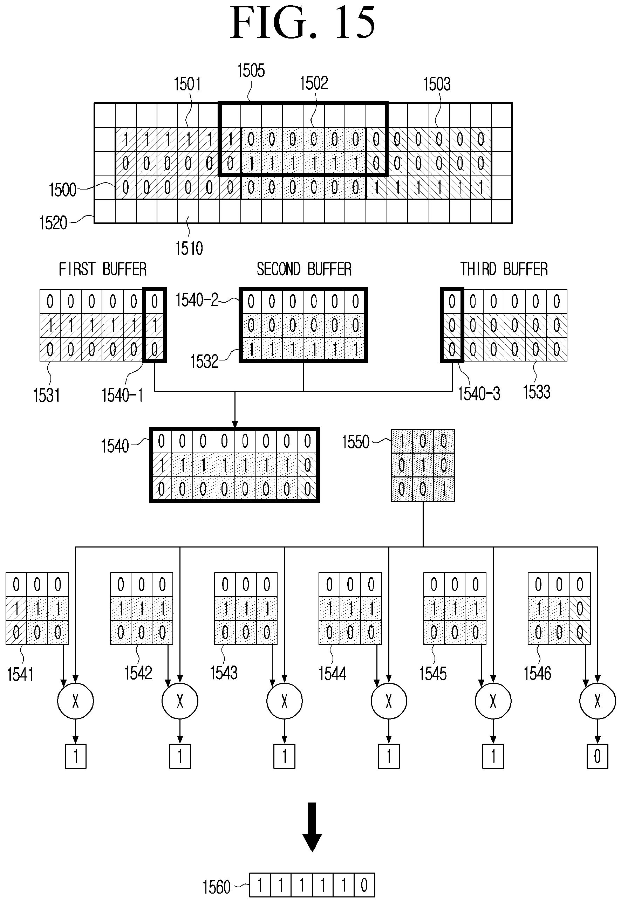

Meanwhile, at least one processor 120 may store the first target region in the first buffer 122-1, store the second target region in the second buffer 122-2, and store the third target region in the third buffer 122-3. Embodiments thereof are described with reference to FIGS. 15, 18 and 21.

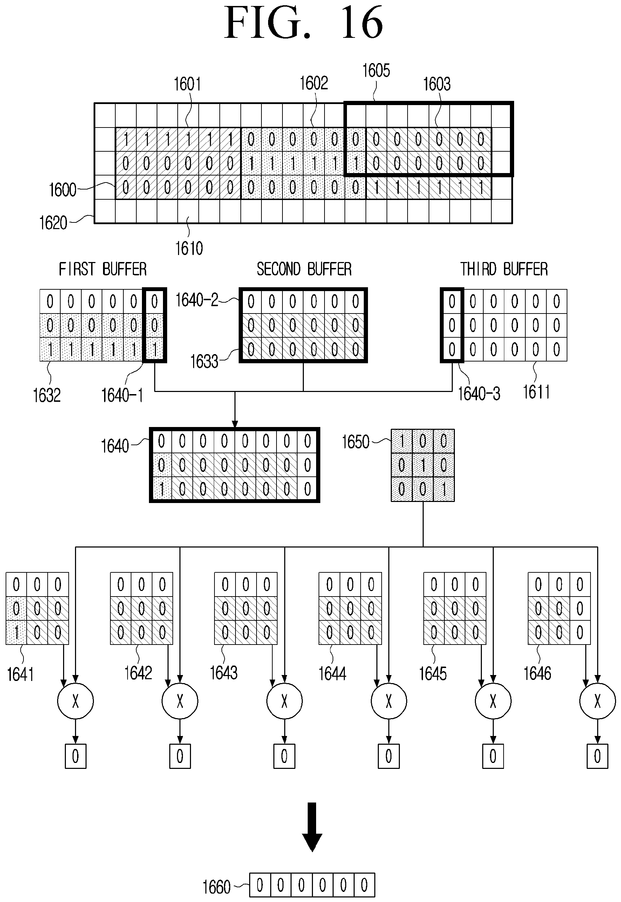

Meanwhile, at least one processor 120 may store the second target region in the first buffer 122-1, store the third target region in the second buffer 122-2, and store the padding region in the third buffer 122-3. Embodiments thereof are described with reference to FIGS. 16, 19 and 22.

Meanwhile, at least one processor 120 may acquire the target data based on a predetermined region among all regions of the first buffer 122-1, a predetermined region among all regions of the second buffer 122-2, and a predetermined region among all regions of the third buffer 122-3, and the predetermined region of the first buffer 122-1, the predetermined region of the second buffer 122-2, and the predetermined region of the third buffer 122-3 may be determined based on the calculation processing unit.

The predetermined region of the first buffer 122-1 may indicate a region including the data disposed on the rightmost row.

The predetermined region of the second buffer 122-2 may indicate all the regions including entire data.

The predetermined region of the third buffer 122-3 may indicate a region including the data disposed on the leftmost row.

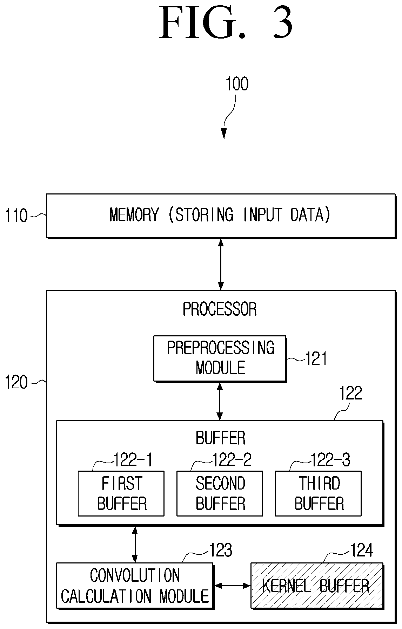

Meanwhile, at least one processor 120 may acquire the kernel data from a kernel buffer 124 included in at least one processor 120. A description of the kernel buffer 124 is described with reference to FIG. 3.

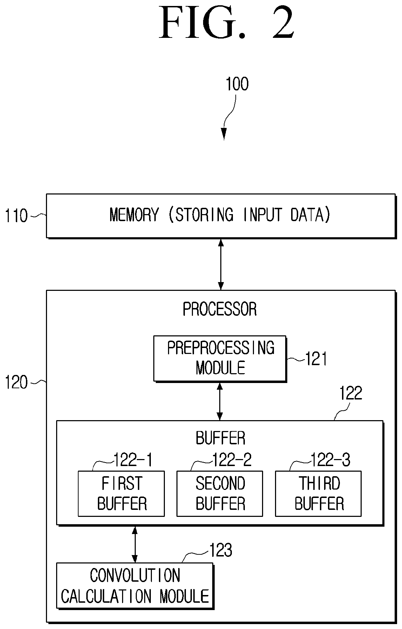

Meanwhile, the above description shows and describes only a simple configuration of the electronic apparatus 100. However, various configurations may be further provided in its implementation. These configurations are described below with reference to FIGS. 2 to 5.

FIG. 2 is a block diagram for explaining a detailed configuration of the electronic apparatus of FIG. 1 according to an embodiment of the disclosure.

Referring to FIG. 2, an electronic apparatus 100 may include the memory 110 and at least one processor 120, and at least one processor 120 may include at least one of a preprocessing module 121, the buffer 122, or the convolution calculation module 123. Meanwhile, the description omits a redundant description of the same operation as that described above among the operations of the electronic apparatus 100.

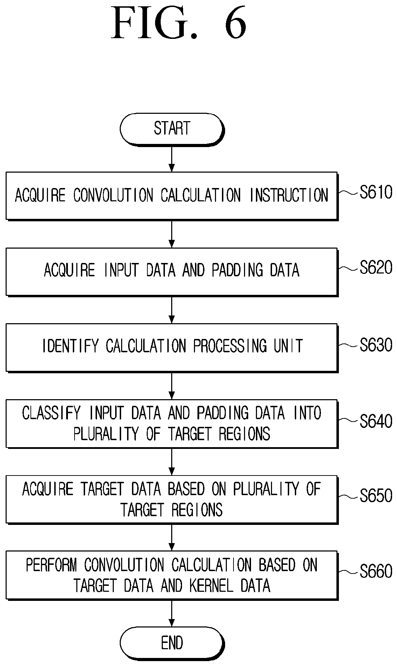

The preprocessing module 121 may be a module which performs a series of operations necessary to perform the convolution calculation. In detail, the preprocessing module 121 may be a module computing the target data necessary for the convolution calculation. For example, the preprocessing module 121 may perform operations S620 to S650 of FIG. 6.

The buffer 122 may include at least one of the first buffer 122-1, the second buffer 122-2, or the third buffer 122-3. The electronic apparatus 100 may divide the data necessary for the convolution calculation and store the same in the first buffer 122-1, the second buffer 122-2, or the third buffer 122-3.

According to the various embodiments, the first buffer 122-1, the second buffer 122-2, and the third buffer 122-3 may have the same size as one another.

According to the various embodiments, at least two buffers of the first buffer 122-1, the second buffer 122-2, and the third buffer 122-3 may have different sizes from each other.

FIG. 3 is a block diagram for explaining a kernel buffer according to an embodiment of the disclosure.

Referring to FIG. 3, the electronic apparatus 100 may include the memory 110 and at least one processor 120, and at least one processor 120 may include at least one of the preprocessing module 121, the buffer 122, the convolution calculation module 123, or the kernel buffer 124. Meanwhile, the description omits a redundant description of the same operation as that described above among the operations of the electronic apparatus 100.

The kernel buffer 124 may be included in at least one processor 120, and the kernel buffer 124 may be a buffer storing the kernel data. The kernel buffer 124 may be described as a weight buffer.

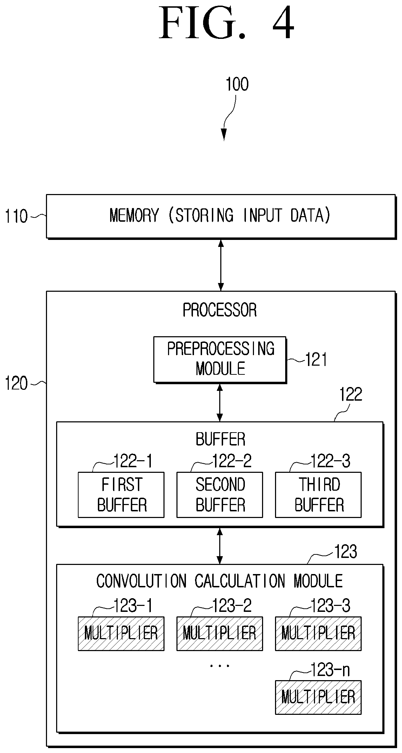

FIG. 4 is a block diagram for explaining multipliers according to an embodiment of the disclosure.

Referring to FIG. 4, the electronic apparatus 100 may include the memory 110 and at least one processor 120, and at least one processor 120 may include at least one of the preprocessing module 121, the buffer 122, or the convolution calculation module 123. Meanwhile, the description omits a redundant description of the same operation as that described above among the operations of the electronic apparatus 100.

The convolution calculation module 123 may include at least one of the multipliers 123-1 to 123-n. The convolution calculation module 123 may include the first multiplier 123-1, the second multiplier 123-2, the third multiplier 123-3, and the like.

At least one of the multipliers 123-1 to 123-n may be included in the convolution calculation module 123 in the form of an array. The number n of the multipliers 123-1 to 123-n may be determined based on the size of the second buffer 122-2 and a size of the kernel buffer 124.

In detail, the number n of the multipliers 123-1 to 123-n may be a multiplication value of the number of data blocks which may be stored in the second buffer 122-2 and the number of data blocks which may be stored in the kernel buffer 124.

For example, assume that the size of the second buffer 122-2 is 3*6 and the size of the kernel buffer 124 is 3*3 as shown in an embodiment of FIG. 14. The number n of the multipliers 123-1 to 123-n may be 162, which is a multiplication value of 18 and 9.

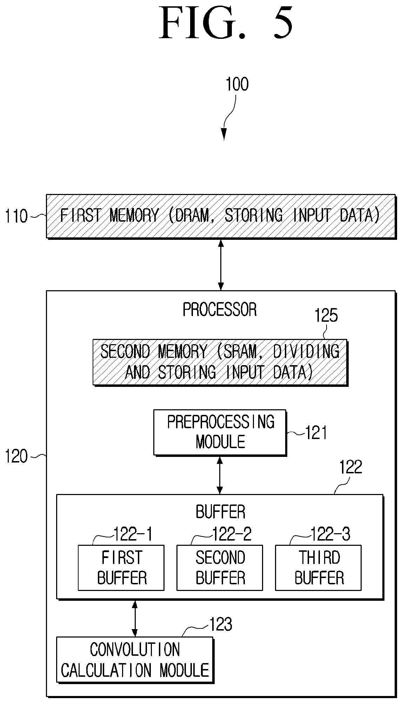

FIG. 5 is a block diagram for explaining the dynamic random access memory (DRAM) and the static random access memory (SRAM) according to an embodiment of the disclosure.

Referring to FIG. 5, the electronic apparatus 100 may include the first memory 110 and at least one processor 120, and at least one processor 120 may include at least one of the preprocessing module 121, the buffer 122, or the convolution calculation module 123. Meanwhile, the description omits a redundant description of the same operation as that described above among the operations of the electronic apparatus 100.

The first memory 110 may be implemented as the DRAM. The first memory 110 may correspond to the memory 110 of FIGS. 1 to 4.

In addition, at least one processor 120 may include a second memory 125. The second memory 125 may be implemented as the SRAM. The electronic apparatus 100 may divide the input data and store the same in the second memory 125 included in at least one processor 120. A lot of resources may be required in case that at least one processor 120 requests the input data from the first memory 110 for the convolution calculation. Accordingly, the electronic apparatus 100 may store a part of the input data by using the second memory 125.

The second memory 125 may have a size determined by hardware, and all the input data cannot be stored in the second memory 125. Accordingly, the electronic apparatus 100 may store a part of the input data in the second memory 125 by using the second memory 125 in consideration of the size of the second memory 125. In addition, the electronic apparatus 100 may update the data stored in the second memory 125 based on the convolution calculation process.

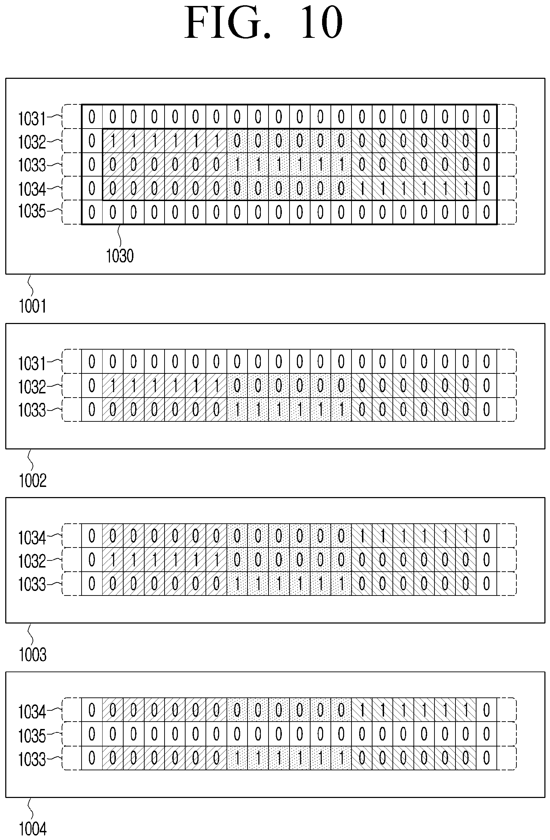

A description of the input data stored in the second memory 125 is described with reference to FIG. 10.

FIG. 6 is a flowchart for explaining an operation of the convolution calculation according to an embodiment of the disclosure.

Referring to FIG. 6, the electronic apparatus 100 may acquire the convolution calculation instruction at operation S610. The convolution calculation instruction may indicate an instruction for using the convolution calculation to convert the input data having the predetermined size to the output data having the predetermined size. The convolution calculation may be a computation performed by the artificial intelligence model. In detail, the electronic apparatus 100 may include a convolutional neural network (CNN) model, and the CNN model may perform the computation operation by using the convolution calculation module 123.

The electronic apparatus 100 may acquire the input data and the padding data at operation S620. The electronic apparatus 100 may acquire the input data, and acquire the padding data corresponding to the input data. A detailed description thereof is described with reference to FIGS. 7 to 10.

The electronic apparatus 100 may identify the calculation processing unit for performing the convolution calculation at operation S630. The calculation processing unit may be the unit of the convolution calculation that may be processed by the convolution calculation module 123. A detailed description thereof is described with reference to FIG. 11.

The electronic apparatus 100 may classify the input data and the padding data into a plurality of target regions at operation S640. The plurality of target regions may indicate the regions acquired by dividing the input data and the padding data based on the size of the buffer 122 to perform the convolution calculation. Each of the plurality of target regions may be stored in the buffer 122. A detailed description thereof is described with reference to FIG. 12.

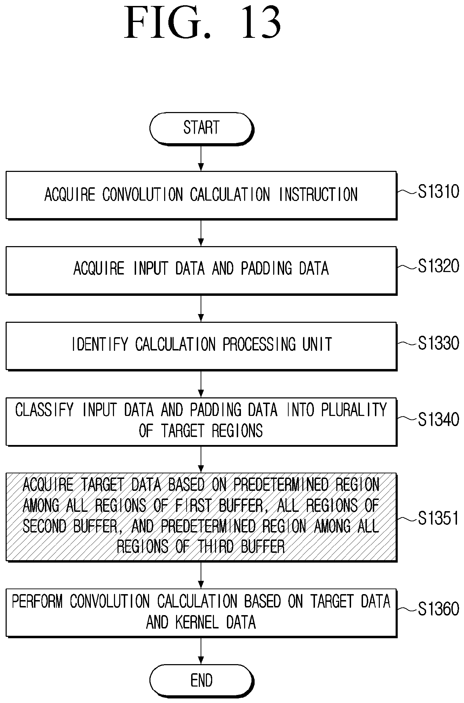

The electronic apparatus 100 may acquire the target data based on the plurality of target regions at operation S650. The target data may be target data for performing the convolution calculation together with the kernel data, in the convolution calculation performed by the convolution calculation module 123. A detailed description of the target data is described with reference to FIG. 13.

The electronic apparatus 100 may perform the convolution calculation based on the target data and the kernel data at operation S660. The kernel data may be filtered data. The kernel data may be a common parameter for finding a feature of the input data. The electronic apparatus 100 may change position of the target data in the input data by a specified distance. The electronic apparatus 100 may perform the convolution calculation based on the changed target data and the kernel data. The kernel data may be the matrix data. Here, the specified distance can be described as the stride.

FIG. 7 is a flowchart for explaining an operation of acquiring the padding data according to an embodiment of the disclosure.

Operations S710, S730, S740, S750, and S760 of FIG. 7 may correspond to the operations S610, S630, S640, S650, and S660 of FIG. 6. Therefore, the description omits redundant descriptions thereof.

The electronic apparatus 100 may acquire the convolution calculation and then acquire (or identify) the padding data corresponding to the input data. In detail, the electronic apparatus 100 may acquire the padding data corresponding to the input data by determining the size of the padding data based on at least one of the size of the input data, the size of the output data, the size of the kernel data, or the size of the stride representing the distance at which the kernel data is applied at operation S721.

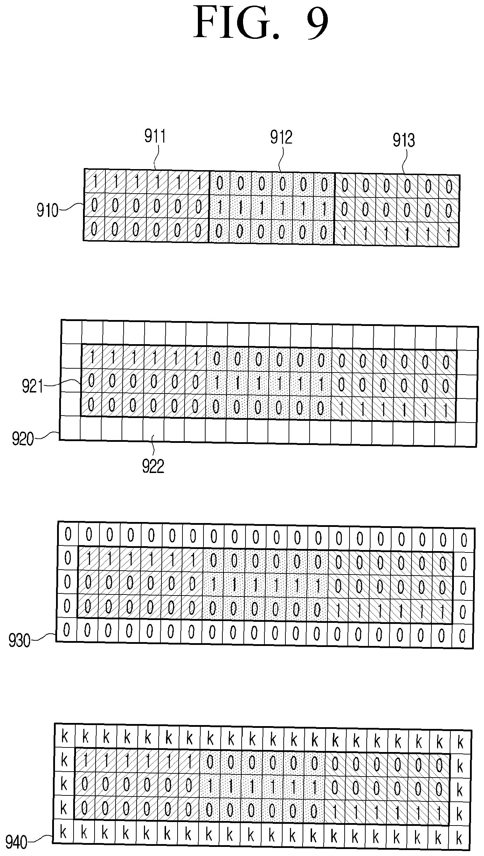

In case that the input data is the matrix data, the padding data may be data for preventing the size of the input data (or the target data) from being reduced by the convolution calculation performed based on the kernel data and the stride. The padding data may be data for filling the predetermined value in the outer position of the input data. The padding data may include outside position information of the input data or the padding value. The padding value may be "zero" or the "predetermined value k". A description of the padding data is described with reference to FIG. 9.

The size of the input data may include a row size of the input data and a column size of the input data.

The size of the output data may include a row size of the output data and a column size of the output data.

The size of the kernel data may include a row size of the kernel data and a column size of the kernel data.

The size of the stride may include a row size of the stride and a column size of the stride.

The electronic apparatus 100 may determine the size of the padding data based on at least one of the size of the input data, the size of the output data, the size of the kernel data, or the size of the stride. A detailed description of determining the size of the padding data is described with reference to FIG. 8.

The electronic apparatus 100 may acquire final padding data based on a determined size of the padding data. The electronic apparatus 100 may acquire the preprocessed data acquired by combining the input data with the padding data. The preprocessed data itself may also be described as the input data in that the preprocessed data is used as the input data for the convolution calculation.

After acquiring the padding data, the electronic apparatus 100 may perform the operations S730 to S760.

FIG. 8 is a view for explaining an operation of computing the size of the padding data according to an embodiment of the disclosure.

The description describes signs described in Equations 810, 820, and 830 of FIG. 8.

Oh may indicate the row size of the output data.

Ow may indicate the column size of the output data.

Ih may indicate the row size of the input data.

Iw may indicate the column size of the input data.

Kh may indicate the row size of the kernel data.

Kw may indicate the column size of the kernel data.

Sh may indicate a row shift size of the stride.

Sw may indicate a column shift size of the stride.

Ph may indicate the row size of the padding data.

Pw may indicate the column size of the padding data.

Referring to Equation 810 of FIG. 8, a formula of the multiplication of the row size Oh of the output data and the column size Ow of the output data may be expressed by the row size Ih of the input data, the column size (Iw=18) of the input data, the row size Kh of the kernel data, the column size Kw of the kernel data, the row shift size Sh of the stride, the column shift size Sw of the stride, the row size Ph of the padding data and the column size Pw of the padding data.

The electronic apparatus 100 may determine the row size Ph of the padding data and the column size Pw of the padding data based on Equation 810.

$$Oh*Ow=f[(Ih-Kh+Sh+Ph)/(Sh)]*f[(Iw-Kw+Sw+Pw)/(Sw)]$$
$$\ldots Equation\ 810$$

Here, f[] may be a function acquiring a value with a fractional part discarded after a division calculation. In addition, f[] may be a floor division function.

Equation 820 represents a process of calculating the row size Ph of the padding data and the column size Pw of the padding data in a specific example.

Assume the following: the row size (Oh=3) of the output data, the column size (Ow=18) of the output data, the row size (Ih=3) of the input data, the column size (Iw=18) of the input data, the row size (Kh=3) of the kernel data, the column size (Kw=3) of the kernel data, the row shift size (Sh=1) of the stride, the column shift size (Sw=1) of the stride.

The electronic apparatus 100 may substitute specific values into Equation 810. In addition, the electronic apparatus 100 may acquire the row size Ph of the padding data and the column size Pw of the padding data that satisfy Equation 810. Here, the plurality of pairs of the row size Ph and column size Pw of the padding data may exist. For example, the electronic apparatus 100 may acquire first padding data (Ph=1, Pw=11) or second padding data (Ph=2, Pw=2).

Meanwhile, according to the various embodiments, the row size Ph of the padding data and the column size Pw of the padding data may be the same as each other.

Equation 830 represents a process of computing the row size Ph of the padding data and the column size Pw of the padding data having the same value as each other.

The electronic apparatus 100 may substitute Ph=Pw into Equation 820. The electronic apparatus 100 may acquire the padding data (Ph=2, Pw=2).

Meanwhile, the padding data may be disposed on the left, right, upper, and lower sides of the input data. Accordingly, a value acquired by dividing the size of the padding data by 2 may be the size of the padding data disposed outside the input data. That is, in case that 2 is the size of the padding data, 1 may be the size of the padding data disposed outside the input data. A description thereof is described with reference to FIG. 9.

FIG. 9 is a view for explaining the input data and the padding data according to an embodiment of the disclosure.

Data 910 of FIG. 9 represents the input data. The input data may be the matrix data having a size of 3*18. The input data 910 may be classified into the plurality of sub-regions based on the size (assumed to be 3*6) of the buffer. The input data may include a first sub-region 911, a second sub-region 912, and a third sub-region 913, which are classified based on the size of the buffer.

Data 920 of FIG. 9 may be the preprocessed data acquired by combining the input data with the padding data. The preprocessed data may include the input data and the padding data corresponding to the input data. The preprocessed data may include an input region 921 where the input data is stored and a padding region 922 where the padding data is stored. The padding value (or the padding data) may be stored in the padding region 922.

Data 930 of FIG. 9 may be the preprocessed data having the padding value of 'zero'.

Data 940 of FIG. 9 may be the preprocessed data having the padding value of the 'predetermined value k'.

FIG. 10 is a view for explaining an operation of temporarily storing the input data and the padding data according to an embodiment of the disclosure.

In Embodiment 1001, data 1030 of FIG. 10 may correspond to the preprocessed data 930 of FIG. 9. The preprocessed data 1030 may be classified for each row. The preprocessed data 1030 may include a region 1031 corresponding to a first row, a region 1032 corresponding to a second row, a region 1033 corresponding to a third row, a region 1034 corresponding to a fourth row, and a region 1035 corresponding to a fifth row.

The convolution calculation module 123 performing the convolution calculation may be included in at least one processor 120, and a space where the input data is stored may be the first memory 110. In addition, at least one processor 120 may include the second memory 125.

A lot of resources may be required in case that the convolution calculation module 123 calls the input data stored in the first memory 110. Therefore, the more calls of the input data, the slower calculation. Therefore, the electronic apparatus 100 may store some of the input data in the memory 125 included in at least one processor 120 to minimize the calls of the input data stored in the first memory 110.

Assume that the second memory 125 included in at least one processor 120 may store data having a size of 3*20. The preprocessed data 1030 may have a size of 5*20, and all of the preprocessed data 1030 cannot be stored in the second memory 125. Accordingly, the electronic apparatus 100 may store only some regions of the preprocessed data 1030 in the second memory 125.

Embodiment 1002 shows the second memory 125 according to the various embodiments. The electronic apparatus 100 may call the region 1031 corresponding to the first row, the region 1032 corresponding to the second row, and the region 1033 corresponding to the third row of the preprocessed data 1030 from the first memory 110, and store the same in the second memory 125.

The electronic apparatus 100 may acquire the target data based on the data stored in the second memory 125 of Embodiment 1002, and may perform the convolution calculation. After completing the convolution calculation using the region 1031 corresponding to the first row, the region 1032 corresponding to the second row, and the region 1033 corresponding to the third row, the electronic apparatus 100 may call the region 1034 corresponding to the fourth row from the first memory 110, and store (or update) the same in the second memory 125.

Embodiment 1003 shows that an update operation is performed on the second memory 125 of Embodiment 1002. The electronic apparatus 100 may delete the region 1031 corresponding to the first row from the second memory 125 of Embodiment 1002, and add the region 1034 corresponding to the fourth row. In detail, the electronic apparatus 100 may update the region 1034 corresponding to the fourth row in a space of the second memory 125 where the region 1031 corresponding to the first row is used to be stored.

The electronic apparatus 100 may acquire the target data based on the data stored in the second memory 125 of Embodiment 1003, and may perform the convolution calculation. After completing the convolution calculation using the region 1032 corresponding to the second row, the region 1033 corresponding to the third row, and the region 1034 corresponding to the fourth row, the electronic apparatus 100 may call the region 1035 corresponding to the fifth row from the first memory 110, and store (or update) the same in the second memory 125.

Embodiment 1004 shows that an update operation is performed on the second memory 125 of Embodiment 1003. The electronic apparatus 100 may delete the region 1032 corresponding to the second row from the second memory 125 of Embodiment 1003, and add the region 1035 corresponding to the fifth row. In detail, the electronic apparatus 100 may update the region 1035 corresponding to the fifth row in a space of the second memory 125 where the region 1032 corresponding to the second row is used to be stored.

FIG. 11 is a flowchart for explaining an operation of computing the size of the calculation processing unit according to an embodiment of the disclosure.

Operations S1110, S1120, S1140, S1150, and S1160 of FIG. 11 may correspond to the operations S610, S620, S640, S650, and S660 of FIG. 6. Therefore, the description omits redundant descriptions thereof.

After acquiring the input data and the padding data, the electronic apparatus 100 may identify the calculation processing unit by determining the row size of the buffer as the row size of the calculation processing unit, and determining the size of a sum of the column size of the buffer and the column size of the padding data as the column size of the calculation processing unit at operation S1131.

The electronic apparatus 100 may determine the row size of the buffer as the row size of the calculation processing unit. For example, assume that the size of the buffer is the size (3*6) of the matrix data. The electronic apparatus 100 may determine the row size (3) of the calculation processing unit based on the row size (3) of the buffer.

In addition, the electronic apparatus 100 may determine the sum of the column size of the buffer and the column size of the padding data as the column size of the calculation processing unit. For example, assume that the size of the buffer is the size (3*6) of the matrix data and 2 is the column size of the padding data. The electronic apparatus 100 may determine the sum (8) of the column size (6) of the buffer and the column size (2) of the padding data as the column size (8) of the calculation processing unit.

The electronic apparatus 100 may determine the size of the calculation processing unit based on the row size of the calculation processing unit and the column size of the calculation processing unit. The electronic apparatus 100 may then perform the operations S1140 to S1160.

FIG. 12 is a flowchart for explaining an operation of determining a target region and storing the same in the buffer according to an embodiment of the disclosure.

Operations S1210, S1220, S1230, S1250, and S1260 of FIG. 12 may correspond to the operations S610, S630, S640, S650, and S660 of FIG. 6. Therefore, the description omits redundant descriptions thereof.

After identifying the calculation processing unit, the electronic apparatus 100 may classify the input data into the first sub-region, the second sub-region, and the third sub-region based on the sizes of the buffers at operation S1241. The plurality of sub-regions may indicate regions where the input data is classified based on the sizes of the buffers. Referring to FIG. 9, the input data may include the first sub-region 911, the second sub-region 912, and the third sub-region 913, which are classified by the sizes of the buffers.

The electronic apparatus 100 may identify the padding region including the padding data based on the sizes of the buffers at operation S1242. The padding region may include the plurality of padding values, and the padding region may be determined based on the sizes of buffers. For example, in case that the size of the buffer is 3*6, the electronic apparatus 100 may acquire the padding region having a size of 3*6, and the padding region may include the padding value. The padding region may correspond to a region 1410 of FIG. 14.

The electronic apparatus 100 may identify the first target region, the second target region, and the third target region based on the position of the calculation processing unit and the sizes of the buffers at operation S1243. In performing the convolution calculation, the electronic apparatus 100 may divide some of all the regions of the preprocessed data (including the input data and the padding data) into the plurality of regions and store the same in the buffers. The plurality of regions where the preprocessed data is divided may be the first target region, the second target region, and the third target region. Each of the first target region, the second target region, and the third target region may be determined based on the position of the calculation processing unit and the size of the buffer.

The position of the calculation processing unit may be changed in the convolution calculation process. The electronic apparatus 100 may identify the target region among all the regions of the preprocessed data based on the position of the calculation processing unit and the size of the buffer, and store the identified target region in the buffer.

The electronic apparatus 100 may store at least one of the padding region, the first target region, the second target region, or the third target region in the first buffer 122-1, the second buffer 122-2, or the third buffer 122-3 at operation S1244.

In detail, the electronic apparatus 100 may store at least one of the padding region, the first target region, the second target region, or the third target region in the first buffer 122-1.

The electronic apparatus 100 may store at least one of the padding region, the first target region, the second target region, or the third target region in the second buffer 122-2. The region stored in the second buffer 122-2 may be different from the region stored in the first buffer 122-1 or that stored in the third buffer 122-3.

The electronic apparatus 100 may store at least one of the padding region, the first target region, the second target region, or the third target region in the third buffer 122-3. The region stored in the third buffer 122-3 may be different from the region stored in the first buffer 122-1 or that stored in the second buffer 122-2.

After storing at least one of the padding region, the first target region, the second target region, or the third target region, the electronic apparatus 100 may then perform the operations S1250 and S1260.

FIG. 13 is a flowchart for explaining an operation of acquiring target data according to an embodiment of the disclosure.

Operations S1310, S1320, S1330, S1340, and S1360 of FIG. 13 may correspond to the operations S610, S620, S630, S640, and S660 of FIG. 6. Therefore, the description omits redundant descriptions thereof.

After classifying the input data and the padding data into the plurality of target regions, the electronic apparatus 100 may acquire the target data based on the predetermined region among all the regions of the first buffer 122-1, the predetermined region among all the regions of the second buffer 122-2, and the predetermined region among all the regions of the third buffer 122-3 at operation S1351.

The electronic apparatus 100 may generate the target data by combining the data (or the region) stored in the first buffer 122-1, the data (or the region) stored in the second buffer 122-2, and the data (or the region) stored in the third buffer 122-3 with one another. The size of the target data may be the same as the size of the calculation processing unit. The electronic apparatus 100 may use all of the first buffer 122-1, the second buffer 122-2, and the third buffer 122-3 to generate the target data having the same size as the calculation processing unit.

After acquiring the target data, the electronic apparatus 100 may perform the operation S1360.

FIG. 14 is a view for explaining an operation of the convolution calculation according to an embodiment of the disclosure.

Referring to FIG. 14, the electronic apparatus 100 may acquire input data 1400 stored in the memory 110 in case of receiving the convolution calculation instruction. In addition, the electronic apparatus 100 may acquire the padding data 1410 corresponding to the input data 1400. In detail, the electronic apparatus 100 may determine a size of the padding data 1410 corresponding to the input data 1400.

The electronic apparatus 100 may acquire the preprocessed data 1420 including the input data 1400 and the padding data 1410. The input data 1400 may indicate an input value itself for performing the convolution calculation. The padding data 1410 may indicate the padding value necessary to perform the convolution calculation in addition to the input data 1400 and a region where the padding value needs to be stored. Accordingly, the padding data 1410 may include the position information where the padding value needs to be stored.

For example, assume that the size of the output data is 3*18, the size of the input data 1400 is 3*18, the size of the kernel data is 3*3, and the size of the stride is 1*1. The electronic apparatus 100 may determine 2 as the row size of the padding data 1410 and 2 as the column size of the padding data (or padding region) 1410. Unlike other data, the padding data 1410 is positioned outside the input data 1400, and the padding data 1410 may thus be disposed on one line in the outer region of the input data 1400. Disposition information (or the position information) may be included in the padding data 1410.

The detailed description of the padding data 1410 is described above with reference to FIGS. 7 to 9.

The electronic apparatus 100 may classify the input data 1400 into the plurality of sub-regions 1401, 1402, and 1403 based on the sizes of the buffers.

For example, assume that the size of the input data 1400 is 3*18 and the size of the buffer is 3*6. The electronic apparatus 100 may classify the input data 1400 into the first sub-region 1401, the second sub-region 1402, and the third sub-region 1403 based on the size (3*6) of the buffer.

The electronic apparatus 100 may identify a calculation processing unit 1405 in case of receiving the convolution calculation instruction. The detailed description of the calculation processing unit is described above with reference to FIG. 11.

The electronic apparatus 100 may identify a padding region 1411 including only the padding data based on the size (3*6) of the buffer. The electronic apparatus 100 may store the padding region 1411 in the first buffer 122-1.

The electronic apparatus 100 may classify the preprocessed data 1420 including the input data 1400 and the padding data 1410 into the plurality of target regions.

The electronic apparatus 100 may identify the first target region 1431 including at least one of the data included in the first sub-region 1401 or the padding data corresponding to the first sub-region 1401 based on a position of the calculation processing unit 1405 and the size (3*6) of the buffer. The padding data corresponding to the first sub-region 1401 may indicate [0,0,0,0,0,0] of a first row in the first target region 1431. The electronic apparatus 100 may store the first target region 1431 in the second buffer 122-2.

The electronic apparatus 100 may identify the second target region 1432 including at least one of the data included in the second sub-region 1402 or the padding data corresponding to the second sub-region 1402 based on the position of the calculation processing unit 1405 and the size (3*6) of the buffer. The padding data corresponding to the second sub-region 1402 may indicate [0,0,0,0,0,0] of a first row in the second target region 1432. The electronic apparatus 100 may store the second target region 1432 in the third buffer 122-3.

The electronic apparatus 100 may generate the target data based on the data stored in the first buffer 122-1, the second buffer 122-2, and the third buffer 122-3. The electronic apparatus 100 may generate target data 1440 by combining data existing in the predetermined regions of the respective buffer with one another.

In detail, the electronic apparatus 100 may generate the target data 1440 based on a predetermined region 1440-1 of the first buffer 122-1, a predetermined region 1440-2 of the second buffer 122-2, and a predetermined region 1440-3 of the third buffer 122-3.

The predetermined region 1440-1 of the first buffer 122-1 and the predetermined region 1440-3 of the third buffer 122-3 may each be some of all regions of the buffers. The predetermined region 1440-2 of the second buffer 122-2 may be all regions of the buffer. A region included in the target data 1440 may be determined based on the calculation processing unit 1405.

The electronic apparatus 100 may perform the convolution calculation based on the target data and kernel data 1450.

The electronic apparatus 100 may divide the target data 1440 by a predetermined size (3*3) and perform the convolution calculation on sub target data 1441, 1442, 1443, 1444, 1445 and 1446, and the kernel data 1450. In addition, the electronic apparatus 100 may acquire output data 1460 corresponding to the calculation processing unit 1405 as a result of the convolution calculation. The output data 1460 corresponding to the calculation processing unit 1405 may be sub-output data corresponding to the calculation processing unit 1405 instead of all the output data of the input data 1400. The output data 1460 may be [1, 1, 1, 1, 1, 2].

FIG. 15 is a view for explaining an operation of the convolution calculation according to an embodiment of the disclosure.

The input data 1500, first sub-data (or first sub-region) 1501, second sub-data (or second sub-region) 1502, third sub-data (or third sub-region) 1503, padding data 1510, preprocessed data 1520, calculation processing unit 1505, first target region 1531, second target region 1532, third target region 1533, predetermined region 1540-1, predetermined region 1540-2, predetermined region 1540-3, target data 1540, sub target data 1541, 1542, 1543, 1544, 1545 and 1546, kernel data 1550, and output data 1560 of FIG. 15 may correspond to those described with reference to FIG. 14. Therefore, the description omits redundant descriptions thereof.

However, the calculation processing unit 1505 of FIG. 15 may have a changed position different from that of the calculation processing unit 1405 of FIG. 14.

The electronic apparatus 100 may store the first target region 1531 in the first buffer 122-1. The electronic apparatus 100 may store the second target region 1532 in the second buffer 122-2. The electronic apparatus 100 may store the third target region 1533 in the third buffer 122-3.

The electronic apparatus 100 may delete the padding region 1411 stored in the first buffer 122-1, and store the first target region 1531 in the first buffer 122-1.

The electronic apparatus 100 may delete the first target region 1431 stored in the second buffer 122-2, and store the second target region 1532 in the second buffer 122-2.

The electronic apparatus 100 may identify the third target region 1533 including at least one of the data included in the third sub-region 1503 or the padding data corresponding to the third sub-region 1503 based on the position of the calculation processing unit 1505 and the size (3*6) of the buffer. The padding data corresponding to the third sub-region 1503 may indicate [0,0,0,0,0,0] of a first row in the third target region 1533. The electronic apparatus 100 may store the third target region 1533 in the third buffer 122-3. The electronic apparatus 100 may delete the second target region 1432 stored in the third buffer 122-3, and store the third target region 1533 in the third buffer 122-3.

The electronic apparatus 100 may generate the target data 1540 based on the predetermined region 1540-1 of the first buffer 122-1, the predetermined region 1540-2 of the second buffer 122-2, and the predetermined region 1540-3 of the third buffer 122-3.

The electronic apparatus 100 may perform the convolution calculation based on the target data 1540 and the kernel data 1550.

The electronic apparatus 100 may acquire the output data 1560 corresponding to the calculation processing unit 1505 as a result of the convolution calculation.

FIG. 16 is a view for explaining an operation of the convolution calculation according to an embodiment of the disclosure.

The input data 1600, first sub-data 1601, second sub-data 1602, third sub-data 1603, padding data 1610, preprocessed data 1620, calculation processing unit 1605, first target region 1631, second target region 1632, third target region 1633, padding region 1611, predetermined region 1640-1, predetermined region 1640-2, predetermined region 1640-3, target data 1640, sub target data 1641, 1642, 1643, 1644, 1645 and 1646, kernel data 1650, and output data 1660 of FIG. 16 may correspond to those described with reference to FIGS. 14 and 15. Therefore, the description omits redundant descriptions thereof.

However, the calculation processing unit 1605 of FIG. 16 may have a changed position different from that of the calculation processing unit 1505 of FIG. 15.

The electronic apparatus 100 may store the second target region 1632 in the first buffer 122-1. The electronic apparatus 100 may store the third target region 1633 in the second buffer 122-2. The electronic apparatus 100 may store the padding region 1611 in the third buffer 122-3.

The electronic apparatus 100 may delete the first target region 1531 stored in the first buffer 122-1, and store the second target region 1632 in the first buffer 122-1.

The electronic apparatus 100 may delete the second target region 1532 stored in the second buffer 122-2, and store the third target region 1633 in the second buffer 122-2.

The electronic apparatus 100 may delete the third target region 1533 stored in the third buffer 122-3, and store the padding region 1611 in the third buffer 122-3.

The electronic apparatus 100 may generate the target data 1640 based on the predetermined region 1640-1 of the first buffer 122-1, the predetermined region 1640-2 of the second buffer 122-2, and the predetermined region 1640-3 of the third buffer 122-3.

The electronic apparatus 100 may perform the convolution calculation based on the target data 1640 and the kernel data 1650.

The electronic apparatus 100 may acquire the output data 1660 corresponding to the calculation processing unit 1605 as a result of the convolution calculation.

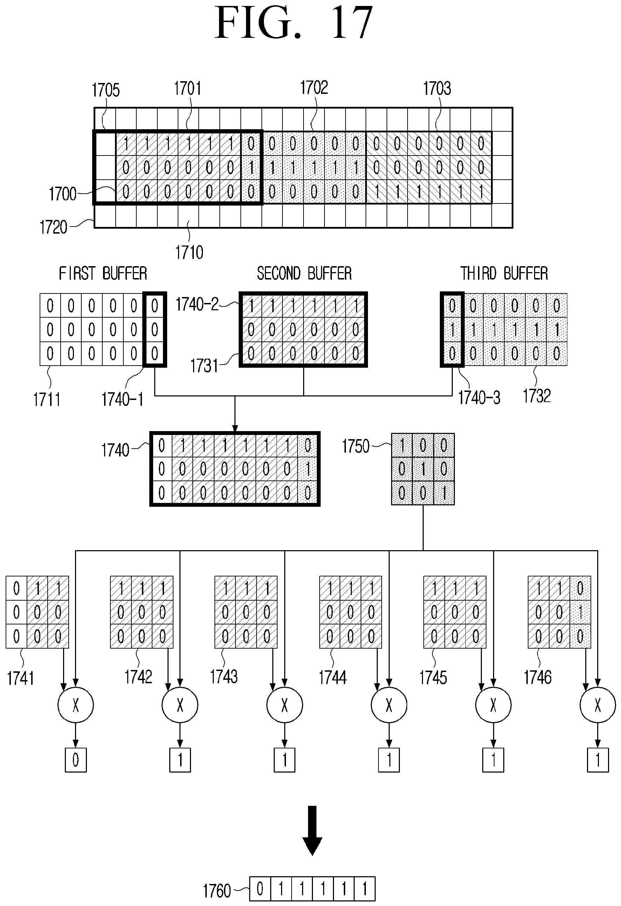

FIG. 17 is a view for explaining an operation of the convolution calculation according to an embodiment of the disclosure.

The input data 1700, first sub-data 1701, second sub-data 1702, third sub-data 1703, padding data 1710, preprocessed data 1720, calculation processing unit 1705, padding region 1711, first target region 1731, second target region 1732, predetermined region 1740-1, predetermined region 1740-2, predetermined region 1740-3, target data 1740, sub target data 1741, 1742, 1743, 1744, 1745 and 1746, kernel data 1750, and output data 1760 of FIG. 17 may correspond to those described with reference to FIGS. 14 and 15. Therefore, the description omits redundant descriptions thereof.

However, the calculation processing unit 1705 of FIG. 17 may have a changed position different from that of the calculation processing unit 1605 of FIG. 16.

The electronic apparatus 100 may store the padding region 1711 in the first buffer 122-1. The electronic apparatus 100 may store the first target region 1731 in the second buffer 122-2. The electronic apparatus 100 may store the second target region 1732 in the third buffer 122-3.

The electronic apparatus 100 may delete the second target region 1632 stored in the first buffer 122-1, and store the padding region 1711 in the first buffer 122-1.

The electronic apparatus 100 may delete the third target region 1633 stored in the second buffer 122-2, and store the first target region 1731 in the second buffer 122-2.

The electronic apparatus 100 may delete the padding region 1611 stored in the third buffer 122-3, and store the second target region 1732 in the third buffer 122-3.

The electronic apparatus 100 may generate the target data 1740 based on the predetermined region 1740-1 of the first buffer 122-1, the predetermined region 1740-2 of the second buffer 122-2, and the predetermined region 1740-3 of the third buffer 122-3.

The electronic apparatus 100 may perform the convolution calculation based on the target data 1740 and the kernel data 1750.

The electronic apparatus 100 may acquire the output data 1760 corresponding to the calculation processing unit 1705 as a result of the convolution calculation.

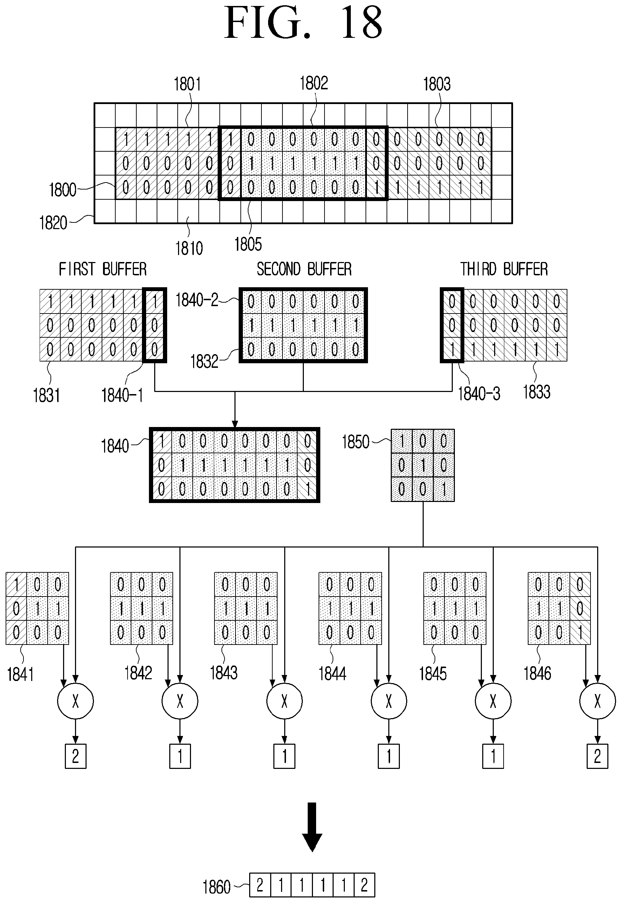

FIG. 18 is a view for explaining an operation of the convolution calculation according to an embodiment of the disclosure.

The input data 1800, first sub-data 1801, second sub-data 1802, third sub-data 1803, padding data 1810, preprocessed data 1820, calculation processing unit 1805, first target region 1831, second target region 1832, third target region 1833, predetermined region 1840-1, predetermined region 1840-2, predetermined region 1840-3, target data 1840, sub target data 1841, 1842, 1843, 1844, 1845 and 1846, kernel data 1850, and output data 1860 of FIG. 18 may correspond to those described with reference to FIGS. 14 and 15. Therefore, the description omits redundant descriptions thereof.

However, the calculation processing unit 1805 of FIG. 18 may have a changed position different from that of the calculation processing unit 1705 of FIG. 17.

The electronic apparatus 100 may store the first target region 1831 in the first buffer 122-1. The electronic apparatus 100 may store the second target region 1832 in the second buffer 122-2. The electronic apparatus 100 may store the third target region 1833 in the third buffer 122-3.

The electronic apparatus 100 may delete the padding region 1711 stored in the first buffer 122-1, and store the first target region 1831 in the first buffer 122-1.

The electronic apparatus 100 may delete the first target region 1731 stored in the second buffer 122-2, and store the second target region 1832 in the second buffer 122-2.

The electronic apparatus 100 may delete the second target region 1732 stored in the third buffer 122-3, and store the third target region 1833 in the third buffer 122-3.

The electronic apparatus 100 may generate the target data 1840 based on the predetermined region 1840-1 of the first buffer 122-1, the predetermined region 1840-2 of the second buffer 122-2, and the predetermined region 1840-3 of the third buffer 122-3.

The electronic apparatus 100 may perform the convolution calculation based on the target data 1840 and the kernel data 1850.

The electronic apparatus 100 may acquire the output data 1860 corresponding to the calculation processing unit 1805 as a result of the convolution calculation.

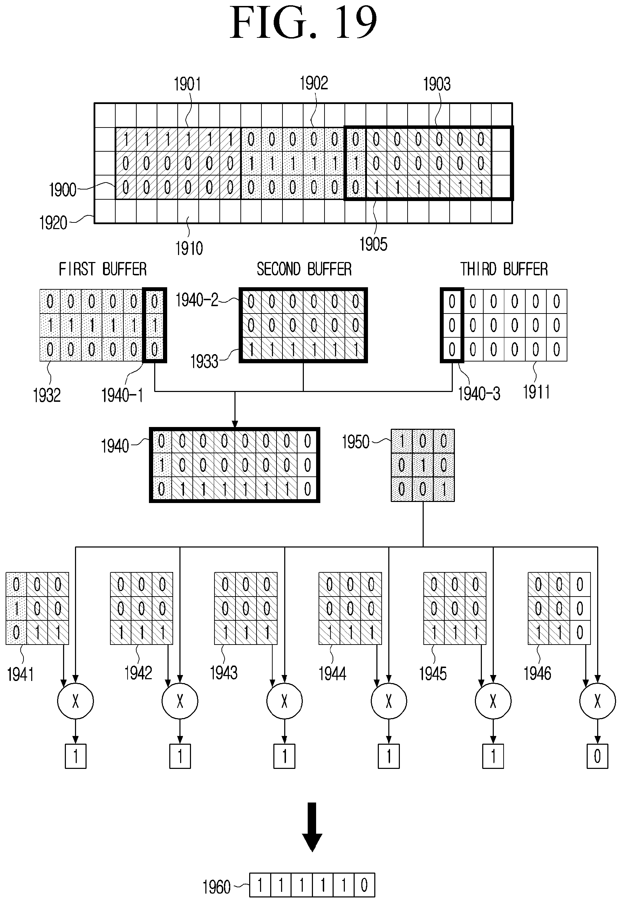

FIG. 19 is a view for explaining an operation of the convolution calculation according to an embodiment of the disclosure.

The input data 1900, first sub-data 1901, second sub-data 1902, third sub-data 1903, padding data 1910, preprocessed data 1920, calculation processing unit 1905, second target region 1932, third target region 1933, padding region 1911, predetermined region 1940-1, predetermined region 1940-2, predetermined region 1940-3, target data 1940, sub target data 1941, 1942, 1943, 1944, 1945 and 1946, kernel data 1950, and output data 1960 of FIG. 19 may correspond to those described with reference to FIGS. 14 and 15. Therefore, the description omits redundant descriptions thereof.

However, the calculation processing unit 1905 of FIG. 19 may have a changed position different from that of the calculation processing unit 1805 of FIG. 18.

The electronic apparatus 100 may store the second target region 1932 in the first buffer 122-1. The electronic apparatus 100 may store the third target region 1933 in the second buffer 122-2. The electronic apparatus 100 may store the padding region 1911 in the third buffer 122-3.

The electronic apparatus 100 may delete the first target region 1831 stored in the first buffer 122-1, and store the second target region 1932 in the first buffer 122-1.

The electronic apparatus 100 may delete the second target region 1832 stored in the second buffer 122-2, and store the third target region 1933 in the second buffer 122-2.

The electronic apparatus 100 may delete the third target region 1833 stored in the third buffer 122-3, and store the padding region 1911 in the third buffer 122-3.

The electronic apparatus 100 may generate the target data 1940 based on the predetermined region 1940-1 of the first buffer 122-1, the predetermined region 1940-2 of the second buffer 122-2, and the predetermined region 1940-3 of the third buffer 122-3.

The electronic apparatus 100 may perform the convolution calculation based on the target data 1940 and the kernel data 1950.

The electronic apparatus 100 may acquire the output data 1960 corresponding to the calculation processing unit 1905 as a result of the convolution calculation.

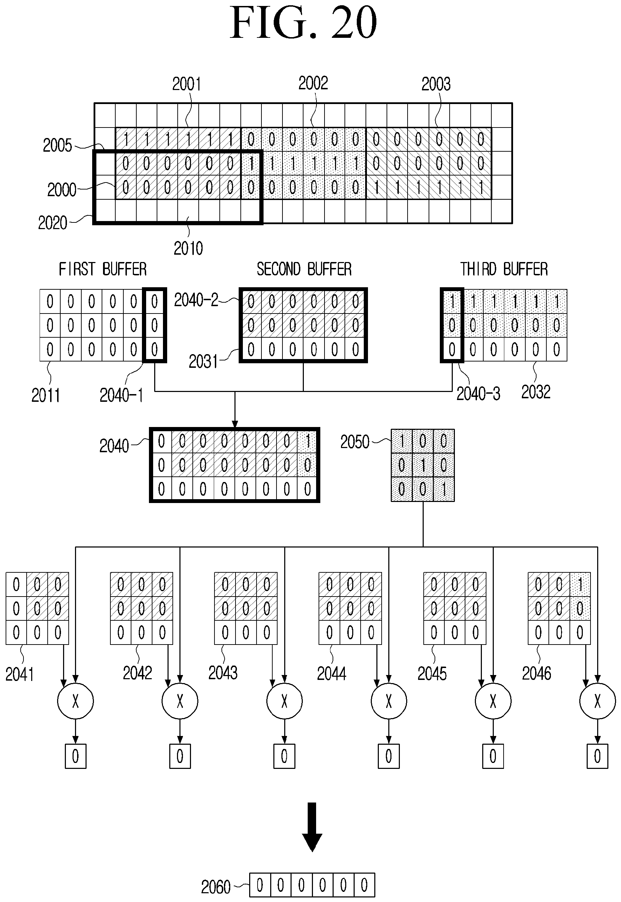

FIG. 20 is a view for explaining an operation of the convolution calculation according to an embodiment of the disclosure.

The input data 2000, first sub-data 2001, second sub-data 2002, third sub-data 2003, padding data 2010, preprocessed data 2020, calculation processing unit 2005, padding region 2011, first target region 2031, second target region 2032, predetermined region 2040-1, predetermined region 2040-2, predetermined region 2040-3, target data 2040, sub target data 2041, 2042, 2043, 2044, 2045 and 2046, kernel data 2050, and output data 2060 of FIG. 20 may correspond to those described with reference to FIGS. 14 and 15. Therefore, the description omits redundant descriptions thereof.

However, the calculation processing unit 2005 of FIG. 20 may have a changed position different from that of the calculation processing unit 1905 of FIG. 19.

The electronic apparatus 100 may store the padding region 2011 in the first buffer 122-1. The electronic apparatus 100 may store the first target region 2031 in the second buffer 122-2. The electronic apparatus 100 may store the second target region 2032 in the third buffer 122-3.

The electronic apparatus 100 may delete the second target region 1932 stored in the first buffer 122-1, and store the padding region 2011 in the first buffer 122-1.

The electronic apparatus 100 may delete the third target region 1933 stored in the second buffer 122-2, and store the first target region 2031 in the second buffer 122-2.

The electronic apparatus 100 may delete the padding region 1911 stored in the third buffer 122-3, and store the second target region 2032 in the third buffer 122-3.

The electronic apparatus 100 may generate the target data 2040 based on the predetermined region 2040-1 of the first buffer 122-1, the predetermined region 2040-2 of the second buffer 122-2, and the predetermined region 2040-3 of the third buffer 122-3.

The electronic apparatus 100 may perform the convolution calculation based on the target data 2040 and the kernel data 2050.

The electronic apparatus 100 may acquire the output data 2060 corresponding to the calculation processing unit 2005 as a result of the convolution calculation.

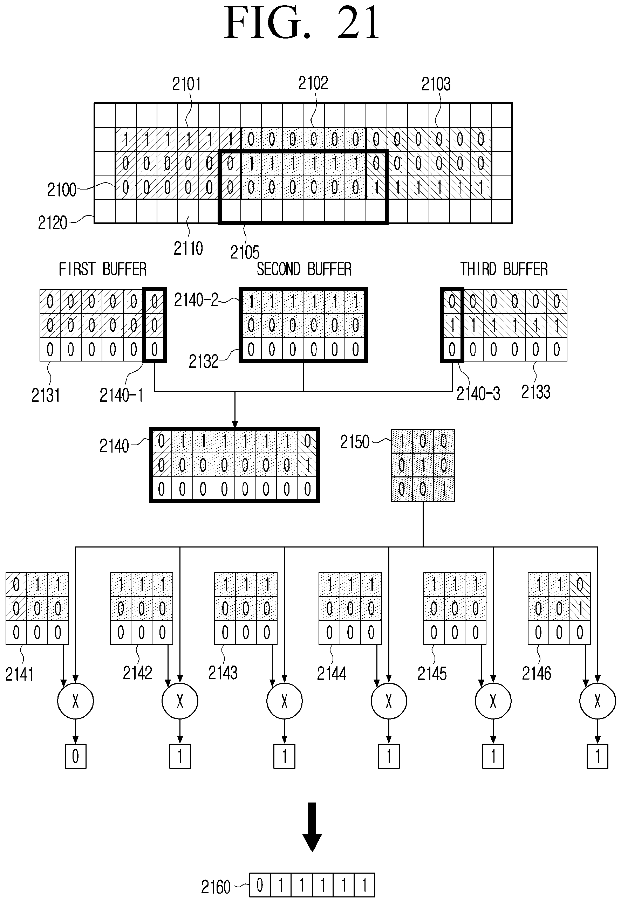

FIG. 21 is a view for explaining an operation of the convolution calculation according to an embodiment of the disclosure.

The input data 2100, first sub-data 2101, second sub-data 2102, third sub-data 2103, padding data 2110, preprocessed data 2120, calculation processing unit 2105, first target region 2131, second target region 2132, third target region 2133, predetermined region 2140-1, predetermined region 2140-2, predetermined region 2140-3, target data 2140, sub target data 2141, 2142, 2143, 2144, 2145 and 2146, kernel data 2150, and output data 2160 of FIG. 21 may correspond to those described with reference to FIGS. 14 and 15. Therefore, the description omits redundant descriptions thereof.

However, the calculation processing unit 2105 of FIG. 21 may have a changed position different from that of the calculation processing unit 2005 of FIG. 20.

The electronic apparatus 100 may store the first target region 2131 in the first buffer 122-1. The electronic apparatus 100 may store the second target region 2132 in the second buffer 122-2. The electronic apparatus 100 may store the third target region 2133 in the third buffer 122-3.

The electronic apparatus 100 may delete the padding region 2011 stored in the first buffer 122-1, and store the first target region 2131 in the first buffer 122-1.

The electronic apparatus 100 may delete the first target region 2031 stored in the second buffer 122-2, and store the second target region 2132 in the second buffer 122-2.

The electronic apparatus 100 may delete the second target region 2032 stored in the third buffer 122-3, and store the third target region 2133 in the third buffer 122-3.

The electronic apparatus 100 may generate the target data 2140 based on the predetermined region 2140-1 of the first buffer 122-1, the predetermined region 2140-2 of the second buffer 122-2, and the predetermined region 2140-3 of the third buffer 122-3.

The electronic apparatus 100 may perform the convolution calculation based on the target data 2140 and the kernel data 2150.

The electronic apparatus 100 may acquire the output data 2160 corresponding to the calculation processing unit 2105 as a result of the convolution calculation.

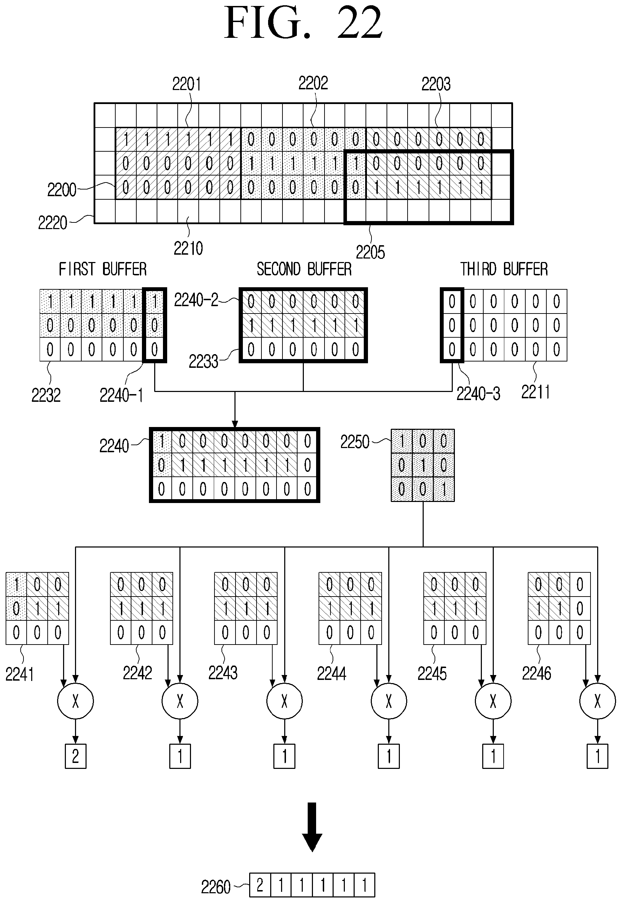

FIG. 22 is a view for explaining an operation of the convolution calculation according to an embodiment of the disclosure.

The input data 2200, first sub-data 2201, second sub-data 2202, third sub-data 2203, padding data 2210, preprocessed data 2220, calculation processing unit 2205, second target region 2232, third target region 2233, padding region 2221, predetermined region 2240-1, predetermined region 2240-2, predetermined region 2240-3, target data 2240, sub target data 2241, 2242, 2243, 2244, 2245 and 2246, kernel data 2250, and output data 2260 of FIG. 22 may correspond to those described with reference to FIGS. 14 and 15. Therefore, the description omits redundant descriptions thereof.

However, the calculation processing unit 2205 of FIG. 22 may have a changed position different from that of the calculation processing unit 2105 of FIG. 21.

The electronic apparatus 100 may store the second target region 2232 in the first buffer 122-1. The electronic apparatus 100 may store the third target region 2233 in the second buffer 122-2. The electronic apparatus 100 may store the padding region 2211 in the third buffer 122-3.

The electronic apparatus 100 may delete the first target region 2131 stored in the first buffer 122-1, and store the second target region 2232 in the first buffer 122-1.

The electronic apparatus 100 may delete the second target region 2132 stored in the second buffer 122-2, and store the third target region 2233 in the second buffer 122-2.

The electronic apparatus 100 may delete the third target region 2133 stored in the third buffer 122-3, and store the padding region 2221 in the third buffer 122-3.

The electronic apparatus 100 may generate the target data 2240 based on the predetermined region 2240-1 of the first buffer 122-1, the predetermined region 2240-2 of the second buffer 122-2, and the predetermined region 2240-3 of the third buffer 122-3.

The electronic apparatus 100 may perform the convolution calculation based on the target data 2240 and the kernel data 2250.

The electronic apparatus 100 may acquire the output data 2260 corresponding to the calculation processing unit 2205 as a result of the convolution calculation.

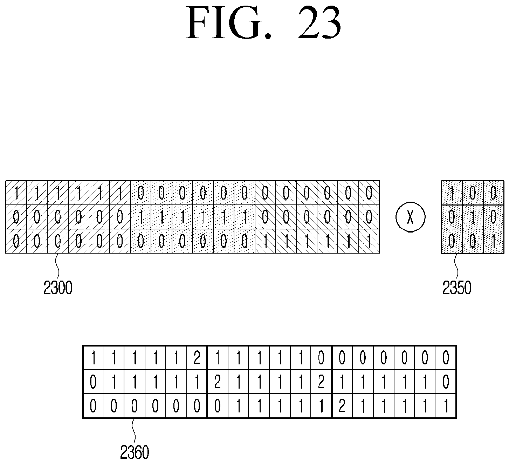

FIG. 23 is a view for explaining output data acquired from an operation of the convolution calculation according to an embodiment of the disclosure.

The input data 2300 and kernel data 2350 of FIG. 23 may correspond to the input data 1400 and kernel data 1450 of FIG. 14. Therefore, the description omits redundant descriptions thereof

The electronic apparatus 100 may perform the convolution calculation based on the input data 2300 and the kernel data 2350. The convolution calculation process for the entire input data 2300 is described with reference to FIGS. 14 to 22.

The electronic apparatus 100 may acquire output data 2360 as a result of the convolution calculation. The output data 2360 may have a size of 3*18.

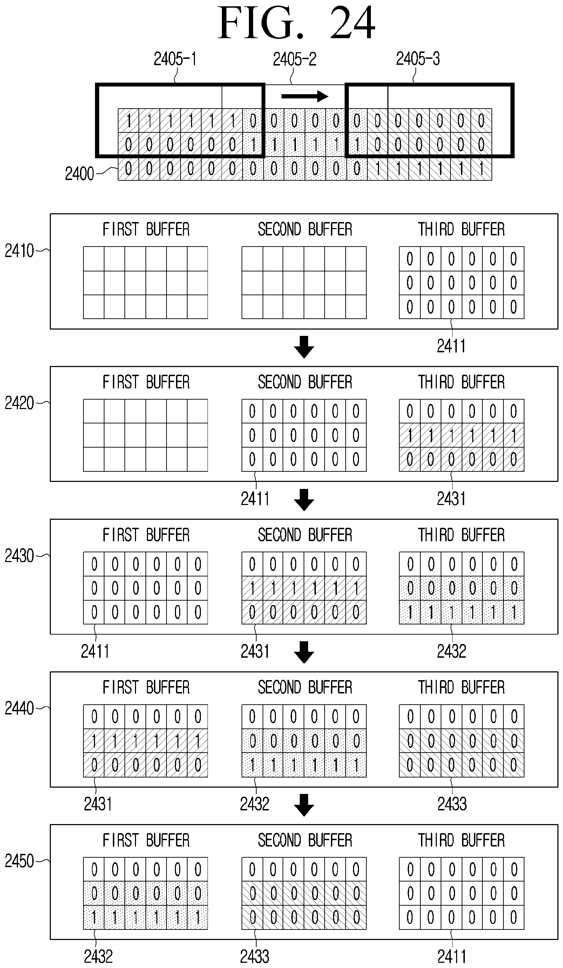

FIG. 24 is a view for explaining the data stored in a first buffer, a second buffer, and a third buffer according to an embodiment of the disclosure.

Referring to FIG. 24, the electronic apparatus 100 may update the data stored in each of the first buffer 122-1, the second buffer 122-2, and the third buffer 122-3 in the convolution calculation process. FIG. 24 shows the calculation process for a first row [1,1,1,1,1,1,0,0,0,0,0,0,0,0,0,0,0,0] of input data 2400. The calculation processing unit may have a position changed in the convolution calculation for the first row of the input data 2400. The calculation processing unit may have a first position of 2405-1. The calculation processing unit may have a second position of 2405-2. The calculation processing unit may have the last position of 2405-3.

The electronic apparatus 100 may classify the preprocessed data including the input data 2400 and the padding data corresponding to the input data 2400 into a plurality of target regions based on the sizes of the buffers and the size of the calculation processing unit. The target region may be changed in every case that the position of the calculation processing unit is changed. The detailed description thereof is described above with reference to FIG. 12.

The electronic apparatus 100 may identify a padding region 2411, a first target region 2431, a second target region 2432, and a third target region 2433. The descriptions of the padding region 2411, the first target region 2431, the second target region 2432, and the third target region 2433 may correspond to those described with reference to FIGS. 14 to 16, and the description thus omits redundant descriptions thereof.

Embodiment 2410, Embodiment 2420, and Embodiment 2430 may correspond to the operation of FIG. 14.

In addition, Embodiment 2440 may correspond to the operation of FIG. 15.

In addition, Embodiment 2450 may correspond to the operation of FIG. 16.

Embodiment 2410 shows states of the first buffer 122-1, the second buffer 122-2, and the third buffer 122-3 at a time point at which the convolution calculation starts. The electronic apparatus 100 may store the padding region 2411 including the padding data only in the third buffer 122-3 without storing any data in the first buffer 122-1 or the second buffer 122-2.

Embodiment 2420 may show an update operation performed after Embodiment 2410. The electronic apparatus 100 may store the padding region 2411 in the second buffer 122-2. The padding region 2411 stored in the second buffer 122-2 may be the same as the padding region 2411 stored in the third buffer 122-3 in Embodiment 2410. In addition, the electronic apparatus 100 may store the first target region 2431 in the third buffer 122-3. The electronic apparatus 100 may delete the padding region 2411 stored in the third buffer 122-3, and store the first target region 2431 in the third buffer 122-3.

The electronic apparatus 100 may not generate the target data in Embodiment 2410 or 2420, and may generate the target data in Embodiments 2430, 2440 and 2450. At least one processor 120 may not generate the target data based on the target region in case that the padding region is stored in the second buffer 122-2 or at least one of the buffers 122-1, 122-2, or 122-3 is in an initialization state.

Embodiment 2430 may show an update operation performed after Embodiment 2420. The electronic apparatus 100 may store the padding region 2411 in the first buffer 122-1, the first target region 2431 in the second buffer 122-2, and the second target region 2432 in the third buffer 122-3. The electronic apparatus 100 may delete the padding region 2411 stored in the second buffer 122-2, and store the first target region 2431 in the second buffer 122-2. The electronic apparatus 100 may delete the first target region 2431 stored in the third buffer 122-3, and store the second target region 2432 in the third buffer 122-3.

Embodiment 2440 may show an update operation performed after Embodiment 2430. The electronic apparatus 100 may store the first target region 2431 in the first buffer 122-1, the second target region 2432 in the second buffer 122-2, and the third target region 2433 in third buffer 122-3. The electronic apparatus 100 may delete the padding region 2411 stored in the first buffer 122-1, and store the first target region 2431 in the first buffer 122-1. The electronic apparatus 100 may delete the first target region 2431 stored in the second buffer 122-2, and store the second target region 2432 in the second buffer 122-2. The electronic apparatus 100 may delete the second target region 2432 stored in the third buffer 122-3, and store the third target region 2433 in the third buffer 122-3.

Embodiment 2450 may show an update operation performed after Embodiment 2440. The electronic apparatus 100 may store the second target region 2432 in the first buffer 122-1, the third target region 2433 in the second buffer 122-2, and the padding region 2411 in third buffer 122-3. The electronic apparatus 100 may delete the first target region 2431 stored in the first buffer 122-1, and store the second target region 2432 in the first buffer 122-1. The electronic apparatus 100 may delete the second target region 2432 stored in the second buffer 122-2, and store the third target region 2433 in the second buffer 122-2. The electronic apparatus 100 may delete the third target region 2433 stored in the third buffer 122-3, and store the padding region 2411 in the third buffer 122-3.

Meanwhile, according to the various embodiments, the padding data may be stored in each of the first buffer 122-1, the second buffer 122-2, and the third buffer 122-3 at the time point at which the convolution calculation starts. For example, the electronic apparatus 100 may store the padding data in each region of the first buffer 122-1, the second buffer 122-2, and the third buffer 122-3 in Embodiment 2410. In Embodiment 2420, the padding data may be stored also in the first buffer 122-1.

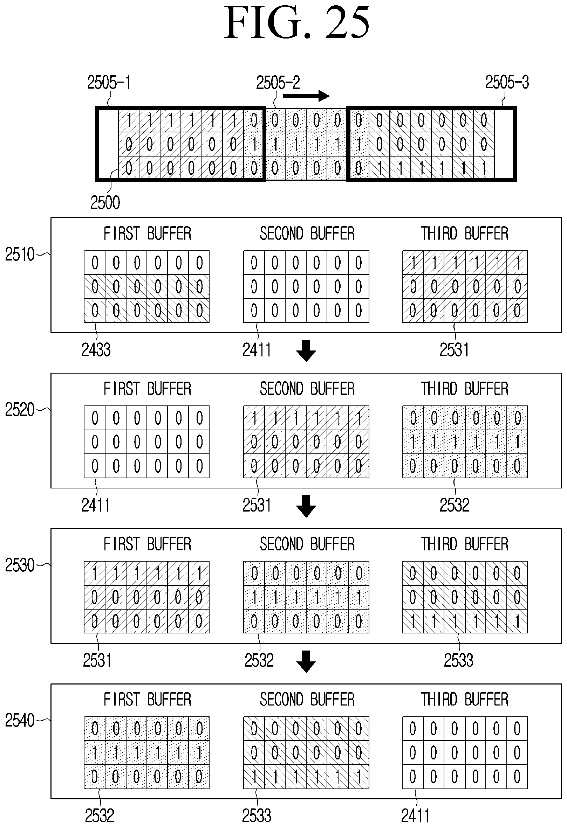

FIG. 25 is a view for explaining the data stored in a first buffer, a second buffer, and a third buffer according to an embodiment of the disclosure.

The input data 2500 and calculation processing units 2505-1, 2505-2, and 2505-3 of FIG. 25 may correspond to those described with reference to FIG. 24. Therefore, the description omits redundant descriptions thereof.

Referring to FIG. 25, the electronic apparatus 100 may update the data stored in each of the first buffer 122-1, the second buffer 122-2, and the third buffer 122-3 in the convolution calculation process. FIG. 25 shows the calculation process for a second row [0,0,0,0,0,0,1,1,1,1,1,1,0,0,0,0,0,0] of the input data 2500. The calculation processing unit may have a position changed in the convolution calculation for the second row of the input data 2500. The calculation processing unit may have a first position of 2505-1. The calculation processing unit may have a second position of 2505-2. The calculation processing unit may have the last position of 2505-3.

The electronic apparatus 100 may classify the preprocessed data including the input data 2500 and the padding data corresponding to the input data 2500 into a plurality of target regions based on the sizes of the buffers and the size of the calculation processing unit. The target region may be changed in every case that the position of the calculation processing unit is changed. The detailed description thereof is described above with reference to FIG. 12.

The electronic apparatus 100 may identify the padding region 2411, a first target region 2531, a second target region 2532, and a third target region 2533. The descriptions of the padding region 2411, the first target region 2531, the second target region 2532, and the third target region 2533 may correspond to those described with reference to FIGS. 17 to 19, and the description thus omits redundant descriptions thereof.

Embodiment 2510 and Embodiment 2520 may correspond to the operation of FIG. 17.

In addition, Embodiment 2530 may correspond to the operation of FIG. 18.

In addition, Embodiment 2540 may correspond to the operation of FIG. 19.

Embodiment 2510 may show an update operation performed after Embodiment 2450. The electronic apparatus 100 may delete the second target region 2432 stored in the first buffer 122-1, and store the third target region 2433 in the first buffer 122-1. The electronic apparatus 100 may delete the third target region 2433 stored in the second buffer 122-2, and store the padding region 2411 in the second buffer 122-2. The electronic apparatus 100 may delete the padding region 2411 stored in the third buffer 122-3, and store the first target region 2531 in the third buffer 122-3.

The electronic apparatus 100 may not generate the target data in Embodiment 2510, and may generate the target data in Embodiments 2520, 2530, and 2540. At least one processor 120 may not generate the target data based on the target region in case that the padding region is stored in the second buffer 122-2 or at least one of the buffers 122-1, 122-2, or 122-3 is in the initialization state.

Embodiment 2520 may show an update operation performed after Embodiment 2510. The electronic apparatus 100 may delete the third target region 2433 stored in the third buffer 122-1, and store the padding region 2411 in the third buffer 122-1. The electronic apparatus 100 may delete the padding region 2411 stored in the second buffer 122-2, and store the first target region 2531 in the second buffer 122-2. The electronic apparatus 100 may delete the first target region 2531 stored in the third buffer 122-3, and store the second target region 2532 in the third buffer 122-3.

Embodiment 2530 may show an update operation performed after Embodiment 2520. The electronic apparatus 100 may delete the padding region 2411 stored in the first buffer 122-1, and store the first target region 2531 in the first buffer 122-1. The electronic apparatus 100 may delete the first target region 2531 stored in the second buffer 122-2, and store the second target region 2532 in the second buffer 122-2. The electronic apparatus 100 may delete the second target region 2532 stored in the third buffer 122-3, and store the third target region 2533 in the third buffer 122-3.

Embodiment 2540 may show an update operation performed after Embodiment 2530. The electronic apparatus 100 may delete the first target region 2531 stored in the first buffer 122-1, and store the second target region 2532 in the first buffer 122-1. The electronic apparatus 100 may delete the second target region 2532 stored in the second buffer 122-2, and store the third target region 2533 in the second buffer 122-2. The electronic apparatus 100 may delete the third target region 2533 stored in the third buffer 122-3, and store the padding region 2411 in the third buffer 122-3.

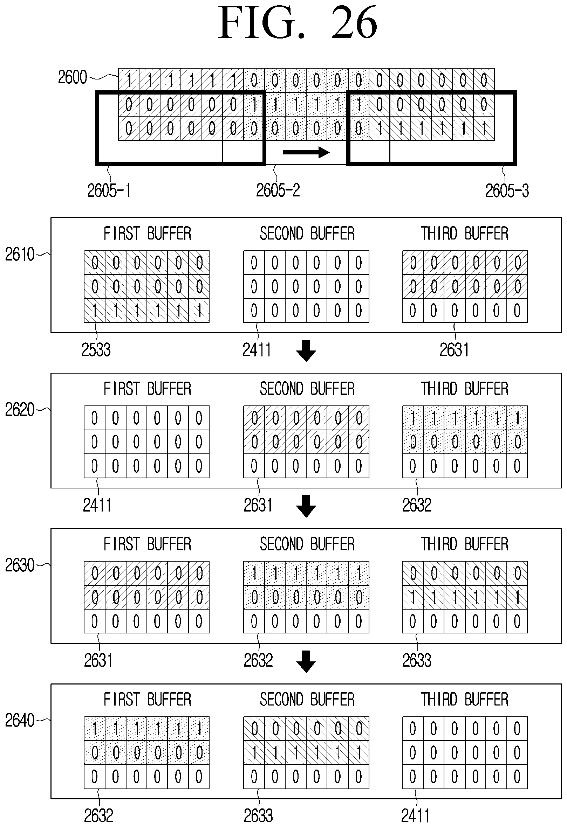

FIG. 26 is a view for explaining the data stored in a first buffer, a second buffer, and a third buffer according to an embodiment of the disclosure.

Referring to FIG. 26, the electronic apparatus 100 may update the data stored in each of the first buffer 122-1, the second buffer 122-2, and the third buffer 122-3 in the convolution calculation process. FIG. 26 shows the calculation process for a third row [0,0,0,0,0,0,0,0,0,0,0,0,1,1,1,1,1,1] of input data 2600. The calculation processing unit may have a position changed in the convolution calculation for the third row of the input data 2600. The calculation processing unit may have a first position of 2605-1. The calculation processing unit may have a second position of 2605-2. The calculation processing unit may have the last position of 2605-3.

The electronic apparatus 100 may classify preprocessed data including the input data 2600 and the padding data corresponding to the input data 2600 into a plurality of target regions based on the sizes of the buffers and the size of the calculation processing unit. The target region may be changed in every case that the position of the calculation processing unit is changed. The detailed description thereof is described above with reference to FIG. 12.

The electronic apparatus 100 may identify the padding region 2411, a first target region 2631, a second target region 2632, and a third target region 2633. The descriptions of the padding region 2411, the first target region 2631, the second target region 2632, and the third target region 2633 may correspond to those described with reference to FIGS. 17 to 19, and the description thus omits redundant descriptions thereof.

Embodiment 2610 and Embodiment 2620 may correspond to the operation of FIG. 20.

In addition, Embodiment 2630 may correspond to the operation of FIG. 21.

In addition, Embodiment 2640 may correspond to the operation of FIG. 22.

Embodiment 2610 may show an update operation performed after Embodiment 2540. The electronic apparatus 100 may delete the second target region 2532 stored in the first buffer 122-1, and store the third target region 2533 in the first buffer 122-1. The electronic apparatus 100 may delete the third target region 2533 stored in the second buffer 122-2, and store the padding region 2411 in the second buffer 122-2. The electronic apparatus 100 may delete the padding region 2411 stored in the third buffer 122-3, and store the first target region 2631 in the third buffer 122-3.

The electronic apparatus 100 may not generate the target data in Embodiment 2610, and may generate the target data in Embodiments 2620, 2630, and 2640. At least one processor 120 may not generate the target data based on the target region in case that the padding region is stored in the second buffer 122-2 or at least one of the buffers 122-1, 122-2, or 122-3 is in the initialization state.

Embodiment 2620 may show an update operation performed after Embodiment 2610. The electronic apparatus 100 may delete the third target region 2533 stored in the first buffer 122-1, and store the padding region 2411 in the first buffer 122-1. The electronic apparatus 100 may delete the padding region 2411 stored in the second buffer 122-2, and store the first target region 2631 in the second buffer 122-2. The electronic apparatus 100 may delete the first target region 2631 stored in the third buffer 122-3, and store the second target region 2632 in the third buffer 122-3.

Embodiment 2630 may show an update operation performed after Embodiment 2620. The electronic apparatus 100 may delete the padding region 2411 stored in the first buffer 122-1, and store the first target region 2631 in the first buffer 122-1. The electronic apparatus 100 may delete the first target region 2631 stored in the second buffer 122-2, and store the second target region 2632 in the second buffer 122-2. The electronic apparatus 100 may delete the second target region 2632 stored in the third buffer 122-3, and store the third target region 2633 in the third buffer 122-3.

Embodiment 2640 may show an update operation performed after Embodiment 2630. The electronic apparatus 100 may delete the first target region 2631 stored in the first buffer 122-1, and store the second target region 2632 in the first buffer 122-1. The electronic apparatus 100 may delete the second target region 2632 stored in the second buffer 122-2, and store the third target region 2633 in the second buffer 122-2. The electronic apparatus 100 may delete the third target region 2633 stored in the third buffer 122-3, and store the padding region 2411 in the third buffer 122-3.

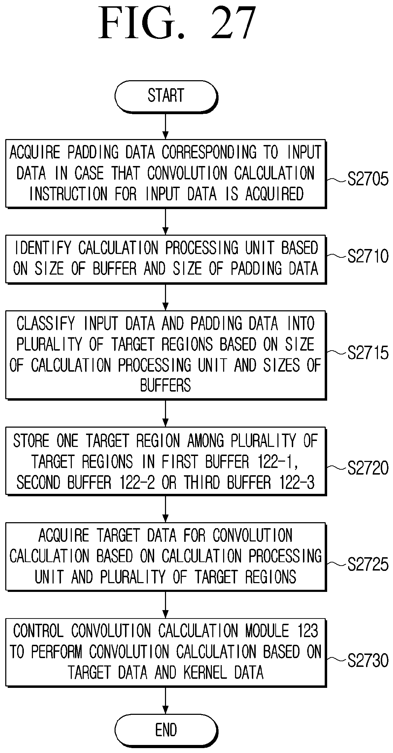

FIG. 27 is a view for explaining a controlling method of an electronic apparatus according to an embodiment of the disclosure.

Referring to FIG. 27, provided is the controlling method of an electronic apparatus 100 which stores input data and includes a convolution calculation module 123, a first buffer 122-1, a second buffer 122-2, and a third buffer 122-3, the method including: acquiring padding data corresponding to the input data in case that a convolution calculation instruction for the input data is acquired at operation S2705; identifying a calculation processing unit based on a size of the buffer and a size of the padding data at operation S2710; classifying the input data and the padding data into a plurality of target regions base" on 'he calculation processing unit and the sizes of the buffers at operation S2715; storing one target region among the plurality of target regions in the first buffer 122-1, the second buffer 122-2, or the third buffer 122-3 at operation S2720; acquiring target data for convolution calculation based on the calculation processing unit and the plurality of target regions at operation S2725; and controlling the convolution calculation module 123 to perform the convolution calculation based on the target data and kernel data at operation S2730.

Meanwhile, in the acquiring of the padding data at operation S2705, the size of the padding data may be determined based on at least one of a size of the input data, a size of output data, a size of the kernel data, or a size of a stride representing a distance at which the kernel data is applied.

Meanwhile, in the identifying of the calculation processing unit at operation S2710, a row size of the buffer may be determined as a row size of the calculation processing unit, and a size of a sum of column, sizes of the buffers, and a column size of the padding data may be used to determine a column size of the calculation processing unit.

Meanwhile, in the classifying at operation S2715, the input data may be classified into a first sub-region, a second sub-region, and a third sub-region based on the sizes of the buffers 122-1, 122-2, and 122-3, a padding region including only the padding data may be identified, and a first target region including data included in the first sub-region, a second target region including data included in the second sub-region, and a third target region including data included in the third sub-region may be identified based on a position of the calculation processing unit and the sizes of the buffers, and in the storing at operation S2720, at least one of the padding region, the first target region, the second target region, or the third target region may be stored in at least one of the first buffer 122-1, the second buffer 122-2, or the third buffer 122-3.

Meanwhile, in the classifying at operation S2715, the first target region including at least one of the data stored in the first sub-region or the padding data corresponding to the first sub-region may be identified based on the position of the calculation processing unit and the sizes of the buffers, the second target region including at least one of the data stored in the second sub-region or the padding data corresponding to the second sub-region may be identified based on the position of the calculation processing unit and the sizes of the buffers, and the third target region including at least one of the data stored in the third sub-region or the padding data corresponding to the third sub-region may be identified based on the position of the calculation processing unit and the sizes of the buffers.

Meanwhile, in the storing at operation S2720, the padding region may be stored in the first buffer 122-1, the first target region may be stored in the second buffer 122-2, and the second target region may be stored in the third buffer 122-3.

Meanwhile, in the storing at operation S2720, the first target region may be stored in the first buffer 122-1, the second target region may be stored in the second buffer 122-2, and the third target region may be stored in the third buffer 122-3.

Meanwhile, in the storing at operation S2720, the second target region may be stored in the first buffer 122-1, the third target region may be stored in the second buffer 122-2, and the padding region may be stored in the third buffer 122-3.

Meanwhile, in the acquiring of the target data at operation S2725, the target data may be acquired based on a predetermined region among all regions of the first buffer 122-1, a predetermined region among all regions of the second buffer 122-2, and a predetermined region among all regions of the third buffer 122-3, and the predetermined region of the first buffer 122-1, the predetermined region of the second buffer 122-2, and the predetermined region of the third buffer 122-3 may be determined based on the calculation processing unit.

Meanwhile, the controlling method may further include acquiring the kernel data from a kernel buffer 124 included in the electronic apparatus 100.

Meanwhile, the controlling method of an electronic apparatus as shown in FIG. 27 may be performed by the electronic apparatus having the configuration of any of FIGS. 1 to 5, and may also be performed by an electronic apparatus having another configuration.

Meanwhile, the method according to the various embodiments of the disclosure described above may be implemented in the form of an application which may be installed on a conventional electronic apparatus.

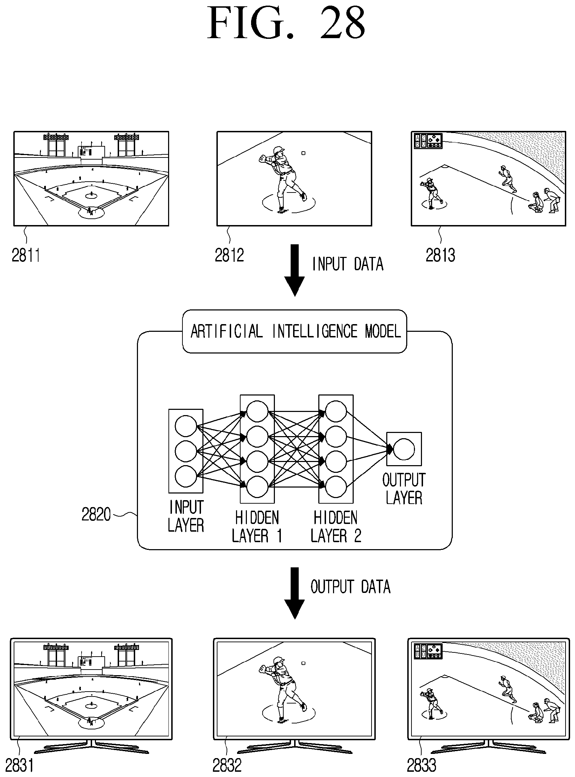

FIG. 28 is a view for explaining an artificial intelligence model which performs a data processing operation by using the plurality of buffers or the like according to embodiment of the disclosure.

Referring to FIG. 28, the electronic apparatus 100 may acquire the output data corresponding to the input data by using the artificial intelligence model 2820. The artificial intelligence model 2820 may be a model using the convolution calculation method disclosed in FIGS. 1 to 27. In detail, the electronic apparatus 100 may store the artificial intelligence model 2820 which classifies the input data and the padding data to divide and store the same in the plurality of buffers in the convolution calculation process.

In general, more modules (e.g., multipliers) performing the calculation may be provided to process the data. However, the module performing the calculation may process data having a predetermined size based on a specific direction (or a specific unit). There is a high possibility that a device processing the data does not know channel information of a calculation target, and the module may thus be required to process the data having the predetermined size in order. Therefore, physical constraints may occur in a method of processing data.

However, the electronic apparatus 100 disclosed in FIGS. 1 to 27 may use the plurality of buffers to improve the constraints occurring in processing the data. The electronic apparatus 100 may consider the input data, the padding data, the size of the buffer, the size of the padding data, the calculation processing unit, the plurality of target regions, the plurality of buffers, the target data, the kernel data, or the like to perform the convolution calculation instruction. The electronic apparatus 100 may increase a processing speed of continuously received data. The electronic apparatus 100 may process the data in the specific direction, and process data in the next order after processing all the data in the specific direction. For example, the electronic apparatus 100 may process data corresponding to a second row in a horizontal direction after processing all the data corresponding to a first row in the horizontal direction.

The electronic apparatus 100 may process the data by using the artificial intelligence model 2820. The purpose of processing the data may be resolution change, image quality improvement, image analysis, or the like. A resolution change operation may be performed to provide an appropriate image in consideration of a resolution provided by a device outputting an image. Unlike the resolution, an image quality improvement operation may be performed to provide an image with higher sharpness in case that the image partially has lower sharpness. An image analysis operation may be performed to identify an object included in an image or acquire information on the identified object.

Meanwhile, the artificial intelligence model 2820 of FIG. 28 shows two hidden layers. However, this configuration is only an example. In some implementation examples, more than two hidden layers may be used by the artificial intelligence model 2820.

FIG. 28 shows the resolution change operation among the various data processing operations. Assume that the artificial intelligence model 2820 is stored in the electronic apparatus 100. The artificial intelligence model 2820 may receive the input data and acquire the output data. The artificial intelligence model 2820 may be a model changing a resolution of the input data. The input data may be at least one frame image.

For example, the electronic apparatus 100 may input (or apply) a first frame image 2811, a second frame image 2812, and a third frame image 2813 to the artificial intelligence model 2820 as the input data. The artificial intelligence model 2820 may process the input (or received) input data by using the plurality of buffers, and may acquire the output data whose resolution is changed based on a processing result.

The resolution change operation may indicate the up-scaling or down-scaling of the resolution. The artificial intelligence model 2820 may determine whether to perform the up-scaling or the down-scaling by using size information (that is, a resolution which may be provided by a display device or an optimal resolution) of the display device of an output target. A resolution of an original image (or a first resolution) and a resolution of the display device (or a second resolution) may not match each other. In this case, the artificial intelligence model 2820 may convert the input data having the resolution of the original image (or the first resolution) to thus acquire output data having the resolution of the display device (or the second resolution). An output image acquired as the output data may be provided to a user through the display device.

The input data may be a content including a plurality of frames. The content may be a video. The electronic apparatus 100 may use the artificial intelligence model 2820 to change a resolution of the content. The artificial intelligence model 2820 may receive the content as the input data and output a content whose resolution is changed as the output data.

According to the various embodiments, the electronic apparatus 100 may pre-store the content. The electronic apparatus 100 may use the artificial intelligence model 2820 to change the resolution of the pre-stored content by using the plurality of buffers.

According to the various embodiments, the electronic apparatus 100 may receive the content in real time. The electronic apparatus 100 may change the resolution of the received content in real time and output (or display) the same.

For example, the electronic apparatus 100 may sequentially receive the first frame image 2811, the second frame image 2812, and the third frame image 2813. The electronic apparatus 100 may then sequentially input the first frame image 2811, the second frame image 2812, and the third frame image 2813 to the artificial intelligence model 2820. The artificial intelligence model 2820 may acquire the output data (or the output image) by changing resolutions of the received input data 2811, 2812, and 2813. The electronic apparatus 100 may sequentially acquire a first output image 2831, a second output image 2832, and a third output image 2833 from the artificial intelligence model 2820. The electronic apparatus 100 may sequentially display the first output image 2831, the second output image 2832, and the third output image 2833 on the display device.

According to the various embodiments, the electronic apparatus 100 may include a display, and the electronic apparatus 100 may output (or display) the first output image 2831, the second output image 2832, and the third output image 2833 on the display of the electronic apparatus 100.

According to the various embodiments, the electronic apparatus 100 may transmit the output images 2831, 2832, and 2833 to an external display device. The external display device may output the output images 2831, 2832, and 2833 received from the electronic apparatus 100.

According to the various embodiments, the artificial intelligence model 2820 may acquire the output data by performing the image quality improvement operation on the input data. The artificial intelligence model 2820 may perform the image quality improvement operation by using the plurality of buffers and the like. The processing speed or an image quality may be improved in case that the image quality improvement operation is performed using the plurality of buffers, or the like.

According to the various embodiments, the artificial intelligence model 2820 may acquire the output data (or analysis result information) by performing the image quality improvement operation on the input data. The artificial intelligence model 2820 may perform the image analysis operation by using the plurality of buffers and the like. The image analysis operation may be performed to identify the object included in the image or acquire the information on the identified object. The image analysis operation may include at least one of an operation of identifying the object included in the image or an operation of acquiring the information on the identified object.

The description above describes that the artificial intelligence model 2820 performs the resolution change service, the image quality improvement service, the image analysis service, or the like. However, the artificial intelligence model 2820 may be applied to various services which may process data in real time in addition to the services described above.

According to the various embodiments, the artificial intelligence model 2820 may transmit the output data to an external server (not shown) instead of the electronic apparatus 100. The electronic apparatus 100 may transmit the input data to the external server storing the artificial intelligence model 2820 to acquire the output data corresponding to the input data. The external server may input (or apply) the input data received from the electronic apparatus 100 to the artificial intelligence model 2820. In addition, the external server may transmit the output data acquired from the artificial intelligence model 2820 to the electronic apparatus 100. The electronic apparatus 100 may acquire the output data from the external server.

**In** addition, the methods according to the various embodiments of the disclosure described above may be implemented only by software upgrade or hardware upgrade of the conventional electronic apparatus.

In addition, the various embodiments of the disclosure described above may be performed through an embedded server included in the electronic apparatus, or an external server of at least one of the electronic apparatus or the display device.

Meanwhile, according to one or more embodiments of the disclosure, the various embodiments described above may be implemented by software including an instruction stored in a machine-readable storage medium (for example, a computer-readable storage medium). A machine may be a device that invokes the stored instruction from a storage medium, may be operated based on the invoked instruction, and may include the electronic apparatus according to the disclosed embodiments. In case that the instruction is executed by the processor, the processor may perform a function corresponding to the instruction directly or by using other components under control of the processor. The instruction may include a code provided or executed by a compiler or an interpreter. The machine-readable storage medium may be provided in the form of a non-transitory storage medium. Here, the term "non-transitory" indicates that the storage medium is tangible without including a signal, and does not distinguish whether data is semi-permanently or temporarily stored in the storage medium.

In addition, according to one or more embodiment of the disclosure, the method according to the various embodiments described above may be provided by being included in a computer program product. The computer program product may be traded as a product between a seller and a purchaser. The computer program product may be distributed in a form of the machine-readable storage medium (for example, a compact disc read only memory (CD-ROM)), or may be distributed online through an application store (for example, PlayStore™). In case of the online distribution, at least a part of the computer program product may be at least temporarily stored in a storage medium such as a memory included in a server of a manufacturer, a server of an application store or a relay server, or be temporarily provided.

In addition, each of the components (for example, modules or programs) according to the various embodiments described above may include a single entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs or other components according to the various embodiments may be executed in a sequential manner, a parallel manner, an iterative manner or a heuristic manner, at least some of the operations may be performed in a different order or be omitted, or other operations may be added.

While the disclosure has been shown and described with reference to various embodiments thereof, it will be understood by those skilled in the art that various changes in form and details may be made therein without departing from the spirit and scope of the disclosure as defined by the appended claims and their equivalents.

**Claims**

1. An electronic apparatus comprising:

   a memory storing input data; and
   at least one processor including a convolution calculation module, a first buffer, a second buffer, and a third buffer, wherein the at least one processor is configured to:

   acquire padding data corresponding to the input data in case of acquiring a convolution calculation instruction for the input data,
   identify a calculation processing unit based on sizes of the first buffer, the second buffer, and the third buffer and a size of the padding data,
   classify the input data and the padding data into a plurality of target regions based on the calculation processing unit and the sizes of the first buffer, the second buffer, and the third buffer,
   store one target region among the plurality of target regions in the first buffer, the second buffer or the third buffer,
   acquire target data for the convolution calculation instruction based on the calculation processing unit and the plurality of target regions, and
   control the convolution calculation module to perform the convolution calculation instruction based on the target data and kernel data.

2. The apparatus as claimed in claim 1, wherein the at least one processor is further configured to determine the size of the padding data based on at least one of a size of the input data, a size of output data, a size of the kernel data, or a size of a stride representing a distance at which the kernel data is applied.

3. The apparatus as claimed in claim 1, wherein the at least one processor is further configured to:

   determine a row size of the buffer as a row size of the calculation processing unit; and
   determine a sum of column sizes of the buffers and a column size of the padding data as a column size of the calculation processing unit.

4. The apparatus as claimed in claim 1, wherein the at least one processor is further configured to:

   classify the input data into a first sub-region, a second sub-region, and a third sub-region based on the sizes of the buffers;
   identify a padding region including only the padding data;
   identify a first target region including data included in the first sub-region, a second target region including data included in the second sub-region, and a third target region including data included in the third sub-region, based on a position of the calculation processing unit and the sizes of the buffers; and
   store at least one of the padding region, the first target region, the second target region, or the third target region in at least one of the first buffer, the second buffer, or the third buffer.

5. The apparatus as claimed in claim 4, wherein the at least one processor is further configured to:

   identify the first target region including at least one of the data stored in the first sub-region or the padding data corresponding to the first sub-region based on the position of the calculation processing unit and the size of the buffers;
   identify the second target region including at least one of the data stored in the second sub-region or the padding data corresponding to the second sub-region based on the position of the calculation processing unit and the sizes of the buffers; and
   identify the third target region including at least one of the data stored in the third sub-region or the padding data corresponding to the third sub-region based on the position of the calculation processing unit and the sizes of the buffers.

6. The apparatus as claimed in claim 5, wherein the at least one processor is further configured to:

   store the padding region in the first buffer;
   store the first target region in the second buffer; and
   store the second target region in the third buffer.

7. The apparatus as claimed in claim 5, wherein the at least one processor is further configured to:

   store the first target region in the first buffer;
   store the second target region in the second buffer; and
   store the third target region in the third buffer.

8. The apparatus as claimed in claim 5, wherein the at least one processor is further configured to:

   store the second target region in the first buffer;
   store the third target region in the second buffer; and
   store the padding region in the third buffer.

9. The apparatus as claimed in claim 5, wherein the at least one processor is further configured to:

   acquire the target data based on a predetermined region among all regions of the first buffer, a predetermined region among all regions of the second buffer, and a predetermined region among all regions of the third buffer, wherein the predetermined region of the first buffer, the predetermined region of the second buffer, and the predetermined region of the third buffer may be determined based on the calculation processing unit.

10. The apparatus as claimed in claim 1, wherein the at least one processor is further configured to acquire the kernel data from a kernel buffer included in the at least one processor.

11. A controlling method of an electronic apparatus which stores input data and includes at least one processor including a convolution calculation module, a first buffer, a second buffer, and a third buffer, the method comprising:

acquiring padding data corresponding to the input data in case that a convolution calculation instruction for the input data is acquired;

identifying a calculation processing unit based on sizes of the first buffer, the second buffer, and the third buffer and a size of the padding data;

classifying the input data and the padding data into a plurality of target regions based on the calculation processing unit and the sizes of the first buffer, the second buffer, and the third buffer;

storing one target region among the plurality of target regions in the first buffer, the second buffer or the third buffer;

acquiring target data for the convolution calculation instruction based on the calculation processing unit and the plurality of target regions; and

controlling the convolution calculation module to perform the convolution calculation instruction based on the target data and kernel data.

12. The method as claimed in claim 11, wherein the acquiring of the padding data comprises determining the size of the padding data based on at least one of a size of the input data, a size of output data, a size of the kernel data, or a size of a stride representing a distance at which the kernel data is applied.

13. The method as claimed in claim 11,

wherein the identifying of the calculation processing unit comprises determining a row size of the buffer as a row size of the calculation processing unit, and

wherein a size of a sum of column, sizes of the buffers, and a column size of the padding data are used to determine a column size of the calculation processing unit.

14. The method as claimed in claim 11,

wherein the classifying of the input data and the padding data comprises,

classifying the input data into a first sub-region, a second sub-region, and a third sub-region based on the sizes of the buffers,

identifying a padding region including only the padding data, and

identifying a first target region including data included in the first sub-region, a second target region including data included in the second sub-region, and a third target region including data included in the third sub-region based on a position of the calculation processing unit and the sizes of the buffers, and

wherein the storing of the one target region comprises storing at least one of the padding region, the first target region, the second target region, or the third target region in at least one of the first buffer, the second buffer, or the third buffer.

15. The method as claimed in claim 14,

wherein the classifying of the input data and the padding data comprises,

identifying the first target region including at least one of the data stored in the first sub-region or the padding data corresponding to the first sub-region based on the position of the calculation processing unit and the sizes of the buffers,

identifying the second target region including at least one of the data stored in the second sub-region or the padding data corresponding to the second sub-region based on the position of the calculation processing unit and the sizes of the buffers, and

identifying the third target region including at least one of the data stored in the third sub-region or the padding data corresponding to the third sub-region based on the position of the calculation processing unit and the sizes of the buffers.

# FIG. 1

100

| 110 | MEMORY |
|---|---|

PROCESSOR

| BUFFER | ~122 |

| CONVOLUTION CALCULATION MODULE | ~123 |

120

# FIG. 2

100

| 110 ~ | MEMORY (STORING INPUT DATA) |
|---|---|

PROCESSOR

| PREPROCESSING MODULE | ~121 |
|---|---|

120 ~

122

BUFFER

| ~122-1 | ~122-2 | ~122-3 |
|---|---|---|
| FIRST BUFFER | SECOND BUFFER | THIRD BUFFER |

~123

CONVOLUTION CALCULATION MODULE

# FIG. 3

100

| 110 | MEMORY (STORING INPUT DATA) |

PROCESSOR

120

PREPROCESSING MODULE — 121

BUFFER 122

122-1 FIRST BUFFER  122-2 SECOND BUFFER  122-3 THIRD BUFFER

123 CONVOLUTION CALCULATION MODULE  124 KERNEL BUFFER

# FIG. 4

100

# FIG. 5

100

110 ~ FIRST MEMORY (DRAM, STORING INPUT DATA)

PROCESSOR

125

SECOND MEMORY (SRAM, DIVIDING AND STORING INPUT DATA)

PREPROCESSING MODULE ~121

120 ~

122

BUFFER

~122-1    ~122-2    ~122-3

FIRST BUFFER    SECOND BUFFER    THIRD BUFFER

~123

CONVOLUTION CALCULATION MODULE

# FIG. 6

```
          ┌─────────┐
          │  START  │
          └────┬────┘
               ↓
┌──────────────────────────────────────────┐
│ ACQUIRE CONVOLUTION CALCULATION INSTRUCTION│──S610
└──────────────────┬───────────────────────┘
                   ↓
┌──────────────────────────────────────────┐
│     ACQUIRE INPUT DATA AND PADDING DATA    │──S620
└──────────────────┬───────────────────────┘
                   ↓
┌──────────────────────────────────────────┐
│      IDENTIFY CALCULATION PROCESSING UNIT  │──S630
└──────────────────┬───────────────────────┘
                   ↓
┌──────────────────────────────────────────┐
│ CLASSIFY INPUT DATA AND PADDING DATA INTO  │──S640
│       PLURALITY OF TARGET REGIONS          │
└──────────────────┬───────────────────────┘
                   ↓
┌──────────────────────────────────────────┐
│ ACQUIRE TARGET DATA BASED ON PLURALITY OF  │──S650
│            TARGET REGIONS                  │
└──────────────────┬───────────────────────┘
                   ↓
┌──────────────────────────────────────────┐
│  PERFORM CONVOLUTION CALCULATION BASED ON  │──S660
│        TARGET DATA AND KERNEL DATA         │
└──────────────────┬───────────────────────┘
                   ↓
          ┌─────────┐
          │   END   │
          └─────────┘
```

# FIG. 7

START

ACQUIRE CONVOLUTION CALCULATION INSTRUCTION ~S710

ACQUIRE PADDING DATA CORRESPONDING TO INPUT DATA BY DETERMINING SIZE OF PADDING DATA BASED ON AT LEAST ONE OF SIZE OF INPUT DATA, SIZE OF OUTPUT DATA, SIZE OF KERNEL DATA, OR SIZE OF STRIDE REPRESENTING DISTANCE AT WHICH KERNEL DATA IS APPLIED ~S721

IDENTIFY CALCULATION PROCESSING UNIT BY DETERMINING ROW SIZE OF BUFFER AS ROW SIZE OF CALCULATION PROCESSING UNIT, AND DETERMINING SUM OF COLUMN SIZES OF BUFFERS AND COLUMN SIZE OF PADDING DATA AS COLUMN SIZE OF CALCULATION PROCESSING UNIT ~S730

CLASSIFY INPUT DATA AND PADDING DATA INTO PLURALITY OF TARGET REGIONS ~S740

ACQUIRE TARGET DATA BASED ON PLURALITY OF TARGET REGIONS ~S750

PERFORM CONVOLUTION CALCULATION BASED ON TARGET DATA AND KERNEL DATA ~S760

END

# FIG. 8

810

$$O_h * O_w = \left\lfloor \frac{(I_h - K_h + S_h + P_h)}{S_h} \right\rfloor * \left\lfloor \frac{(I_w - K_w + S_w + P_w)}{S_w} \right\rfloor$$

820

$$3 * 18 = \left\lfloor \frac{3 - 3 + 1 + P_h}{1} \right\rfloor * \left\lfloor \frac{18 - 3 + 1 + P_w}{1} \right\rfloor$$

$$54 \quad = \left\lfloor 1 + P_h \right\rfloor * \left\lfloor 16 + P_w \right\rfloor$$

$$P_h = 1, \ P_w = 11$$
$$P_h = 2, \ P_w = 2$$

830

$$54 \quad = \left\lfloor 1 + P_h \right\rfloor * \left\lfloor 16 + P_w \right\rfloor$$

$$P_h = P_w = 2$$

# FIG. 9

# FIG. 10

# FIG. 11

START

ACQUIRE CONVOLUTION CALCULATION INSTRUCTION — S1110

ACQUIRE INPUT DATA AND PADDING DATA — S1120

IDENTIFY CALCULATION PROCESSING UNIT BY DETERMINING ROW SIZE OF BUFFER AS ROW SIZE OF CALCULATION PROCESSING UNIT, AND DETERMINING SUM OF COLUMN SIZES OF BUFFERS AND COLUMN SIZE OF PADDING DATA AS COLUMN SIZE OF CALCULATION PROCESSING UNIT — S1131

CLASSIFY INPUT DATA AND PADDING DATA INTO PLURALITY OF TARGET REGIONS — S1140

ACQUIRE TARGET DATA BASED ON PLURALITY OF TARGET REGIONS — S1150

PERFORM CONVOLUTION CALCULATION BASED ON TARGET DATA AND KERNEL DATA — S1160

END

# FIG. 12

START

↓

ACQUIRE CONVOLUTION CALCULATION INSTRUCTION ── S1210

↓

ACQUIRE INPUT DATA AND PADDING DATA ── S1220

↓

IDENTIFY CALCULATION PROCESSING UNIT ── S1230

↓

CLASSIFY INPUT DATA INTO FIRST SUB-REGION, SECOND SUB-REGION, AND THIRD SUB-REGION BASED ON SIZES OF BUFFERS ── S1241

↓

IDENTIFY PADDING REGION INCLUDING ONLY PADDING DATA BASED ON SIZES OF BUFFERS ── S1242

↓

IDENTIFY FIRST TARGET REGION, SECOND TARGET REGION, AND THIRD TARGET REGION BASED ON POSITION OF CALCULATION PROCESSING UNIT AND SIZES OF BUFFERS ── S1243

↓

STORE AT LEAST ONE OF PADDING REGION, FIRST TARGET REGION, SECOND TARGET REGION, OR THIRD TARGET REGION IN FIRST BUFFER, SECOND BUFFER, OR THIRD BUFFER ── S1244

↓

ACQUIRE TARGET DATA BASED ON PLURALITY OF TARGET REGIONS ── S1250

↓

PERFORM CONVOLUTION CALCULATION BASED ON TARGET DATA AND KERNEL DATA ── S1260

↓

END

# FIG. 13

```
        ┌─────────────┐
        │    START     │
        └─────────────┘
               │
               ▼
┌──────────────────────────────────────────┐
│ ACQUIRE CONVOLUTION CALCULATION INSTRUCTION │───S1310
└──────────────────────────────────────────┘
               │
               ▼
┌──────────────────────────────────────────┐
│     ACQUIRE INPUT DATA AND PADDING DATA    │───S1320
└──────────────────────────────────────────┘
               │
               ▼
┌──────────────────────────────────────────┐
│      IDENTIFY CALCULATION PROCESSING UNIT   │───S1330
└──────────────────────────────────────────┘
               │
               ▼
┌──────────────────────────────────────────┐
│ CLASSIFY INPUT DATA AND PADDING DATA INTO   │───S1340
│ PLURALITY OF TARGET REGIONS                │
└──────────────────────────────────────────┘
               │
               ▼
┌──────────────────────────────────────────┐
│ ACQUIRE TARGET DATA BASED ON PREDETERMINED  │
│ REGION AMONG ALL REGIONS OF FIRST BUFFER,   │───S1351
│ ALL REGIONS OF SECOND BUFFER, AND          │
│ PREDETERMINED REGION AMONG ALL REGIONS     │
│ OF THIRD BUFFER                            │
└──────────────────────────────────────────┘
               │
               ▼
┌──────────────────────────────────────────┐
│ PERFORM CONVOLUTION CALCULATION BASED ON    │───S1360
│ TARGET DATA AND KERNEL DATA                │
└──────────────────────────────────────────┘
               │
               ▼
        ┌─────────────┐
        │     END      │
        └─────────────┘
```

# FIG. 14

# FIG. 15

# FIG. 16

# FIG. 17

# FIG. 18

# FIG. 19

# FIG. 20

FIG. 21

# FIG. 22

# FIG. 23

# FIG. 24

# FIG. 25

# FIG. 26

# FIG. 27

```
        ┌─────────┐
        │  START  │
        └─────────┘
             │
             ▼
┌──────────────────────────────────────┐
│  ACQUIRE PADDING DATA CORRESPONDING TO INPUT │
│  DATA IN CASE THAT CONVOLUTION CALCULATION   │────S2705
│  INSTRUCTION FOR INPUT DATA IS ACQUIRED      │
└──────────────────────────────────────┘
             │
             ▼
┌──────────────────────────────────────┐
│  IDENTIFY CALCULATION PROCESSING UNIT BASED  │────S2710
│  ON SIZE OF BUFFER AND SIZE OF PADDING DATA  │
└──────────────────────────────────────┘
             │
             ▼
┌──────────────────────────────────────┐
│  CLASSIFY INPUT DATA AND PADDING DATA INTO   │
│  PLURALITY OF TARGET REGIONS BASED ON SIZE   │────S2715
│  OF CALCULATION PROCESSING UNIT AND SIZES OF │
│  BUFFERS                                      │
└──────────────────────────────────────┘
             │
             ▼
┌──────────────────────────────────────┐
│  STORE ONE TARGET REGION AMONG PLURALITY OF  │
│  TARGET REGIONS IN FIRST BUFFER 122-1,       │────S2720
│  SECOND BUFFER 122-2 OR THIRD BUFFER 122-3   │
└──────────────────────────────────────┘
             │
             ▼
┌──────────────────────────────────────┐
│  ACQUIRE TARGET DATA FOR CONVOLUTION         │
│  CALCULATION BASED ON CALCULATION PROCESSING │────S2725
│  UNIT AND PLURALITY OF TARGET REGIONS        │
└──────────────────────────────────────┘
             │
             ▼
┌──────────────────────────────────────┐
│  CONTROL CONVOLUTION CALCULATION MODULE 123  │
│  TO PERFORM CONVOLUTION CALCULATION BASED ON │────S2730
│  TARGET DATA AND KERNEL DATA                 │
└──────────────────────────────────────┘
             │
             ▼
        ┌─────────┐
        │   END   │
        └─────────┘
```

# FIG. 28

2811

2812

INPUT DATA

2813

ARTIFICIAL INTELLIGENCE MODEL

2820

INPUT LAYER

HIDDEN LAYER 1

HIDDEN LAYER 2

OUTPUT LAYER

OUTPUT DATA

2831

2832

2833

<div align="center">**INTERNATIONAL SEARCH REPORT**</div>

| International application No. |
|---|
| **PCT/KR2023/014234** |

| A. | CLASSIFICATION OF SUBJECT MATTER |
|---|---|

**G06N 3/063**(2006.01)i; **G06N 3/0464**(2023.01)i; **G06F 17/15**(2006.01)i

According to International Patent Classification (IPC) or to both national classification and IPC

| B. | FIELDS SEARCHED |
|---|---|

Minimum documentation searched (classification system followed by classification symbols)

G06N 3/063(2006.01); G06F 17/15(2006.01); G06F 5/06(2006.01); G06N 20/00(2019.01); G06N 3/04(2006.01); G06N 3/08(2006.01); G06Q 30/02(2012.01); G06T 1/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 컨볼루션 연산(convolution operation), 패딩(padding), 버퍼(buffer), 크기(size), 타겟 데이터(target data)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2107077 B1 (ANAPASS INC.) 06 May 2020 (2020-05-06)<br>See paragraphs [0038] and [0094]; and claim 1. | 1-15 |
| A | KR 10-2415508 B1 (SAMSUNG ELECTRONICS CO., LTD.) 01 July 2022 (2022-07-01)<br>See paragraphs [0056], [0065] and [0076]-[0082]. | 1-15 |
| A | CN 114692073 A (EGIS TECHNOLOGY INC.) 01 July 2022 (2022-07-01)<br>See paragraphs [0127]-[0129]; and claim 1. | 1-15 |
| A | KR 10-2275499 B1 (NANJING HORIZON ROBOTICS TECHNOLOGY CO., LTD.) 08 July 2021 (2021-07-08)<br>See paragraphs [0048]-[0054]. | 1-15 |
| A | CN 110910158 A (SHENZHEN LOGITECH CO., LTD.) 24 March 2020 (2020-03-24)<br>See paragraphs [0047]-[0053]. | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 January 2024** | **10 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><th colspan="2">INTERNATIONAL SEARCH REPORT<br>Information on patent family members</th><th colspan="2">International application No.<br><br>**PCT/KR2023/014234**</th></tr>
</table>

| Patent document<br>cited in search report | Publication date<br>(day/month/year) | Patent family member(s) | Publication date<br>(day/month/year) |
|---|---|---|---|
| KR 10-2107077 B1 | 06 May 2020 | None | |
| KR 10-2415508 B1 | 01 July 2022 | US 11514290 B2 | 29 November 2022 |
| | | US 2018-0285715 A1 | 04 October 2018 |
| | | US 2023-0051648 A1 | 16 February 2023 |
| CN 114692073 A | 01 July 2022 | CN 114706088 A | 05 July 2022 |
| | | CN 115128713 A | 30 September 2022 |
| | | CN 218350606 U | 20 January 2023 |
| | | TW 202305403 A | 01 February 2023 |
| | | TW 202305447 A | 01 February 2023 |
| | | TW M634913 U | 01 December 2022 |
| | | US 2022-0374493 A1 | 24 November 2022 |
| | | US 2022-0374494 A1 | 24 November 2022 |
| | | US 2022-0374495 A1 | 24 November 2022 |
| | | US 2023-0028250 A1 | 26 January 2023 |
| | | WO 2023-001005 A1 | 26 January 2023 |
| KR 10-2275499 B1 | 08 July 2021 | CN 107729994 A | 23 February 2018 |
| | | CN 107729994 B | 26 May 2020 |
| | | EP 3489862 A1 | 29 May 2019 |
| | | EP 3489862 B1 | 11 August 2021 |
| | | JP 2019-125351 A | 25 July 2019 |
| | | JP 6775565 B2 | 28 October 2020 |
| | | US 11822616 B2 | 21 November 2023 |
| | | US 2019-0163716 A1 | 30 May 2019 |
| CN 110910158 A | 24 March 2020 | None | |

Form PCT/ISA/210 (patent family annex) (July 2022)